# EUROPÄISCHE PATENTSCHRIFT

(11) **EP 1 848 952 B1**
(45) Veröffentlichungstag und Bekanntmachung des Hinweises auf die Patenterteilung: **20.11.2013**
(21) Anmeldenummer: 06706779.3
(22) Anmeldetag: 09.02.2006
(51) Int. Cl.: F41G 3/32, F41G 3/06

(54) **ZIELFERNROHR MIT EINEM ENTFERNUNGSMESSER**
TELESCOPIC SIGHT COMPRISING A RANGEFINDER
LUNETTE DE VISEE POURVUE D'UN TELEMETRE

(30) Priorität: 10.02.2005 DE 102005007916
(43) Veröffentlichungstag der Anmeldung: 31.10.2007
(73) Patentinhaber: Carl Zeiss Sports Optics GmbH, 35576 Wetzlar (DE)
(72) Erfinder: SCHLIERBACH, Armin, 35638 Leun (DE); POLZER, Gard, 35586 Wetzlar (DE); HELLER, Matthias, 35644 Hohenahr (DE)
(74) Vertreter: Witte, Weller & Partner
(86) Internationale Anmeldenummer: PCT/EP2006/001142
(87) Internationale Veröffentlichungsnummer: WO 2006/084689

(56) Entgegenhaltungen:
- EP-A- 0 709 705
- WO-A-00/77554
- DE-A1- 3 329 589
- DE-A1- 3 639 326
- DE-B- 1 210 360

## Beschreibung

Die Erfindung betrifft ein Zielfernrohr mit einer optischen Achse und mit einer Visierlinie, mit ersten Mitteln zum Verstellen der Richtung der Visierlinie, mit einem mit dem Zielfernrohr baulich verbundenen Entfernungsmesser, der eine Lichtquelle zum Aussenden eines Mess-Sendestrahls aufweist, wobei der Mess-Sendestrahl außerhalb des Zielfernrohrs verläuft und dessen Richtung mit der Richtung der Visierlinie im wesentlichen übereinstimmt, und mit zweiten Mitteln zum selbsttätigen Nachführen der Richtung des Mess-Sendestrahls beim Verstellen der Richtung der Visierlinie.

Ein Zielfernrohr der vorstehend genannten Art ist aus der Druckschrift DE 1 210 360 B (= US 3,464,770 A) bekannt.

Bei Zielfernrohren ist es bekannt, Einstellmittel, sog. "Türme" vorzusehen, die es gestatten, die Visierlinie im Zielfernrohr in definierten Schritten entweder in der Vertikalen oder in der Horizontalen zu verstellen. Dabei wird üblicherweise entweder die Zielmarke verstellt oder das Objektiv. Damit kann das Zielfernrohr, das von Hause aus für eine bestimmte Munition auf eine bestimmte Entfernung eingeschossen ist, so nachjustiert werden, dass auch bei einer anderen Entfernung und/oder einer anderen Munition zielgenaue Schüsse möglich sind. Ferner können auch andere Störgrößen kompensiert werden, beispielsweise ein bereits vorhandener Anstellwinkel des Zielfernrohrs, wenn sich das Zielobjekt auf einer anderen Höhe als der Schütze befindet, ferner aber auch Umwelteinflüsse, wie z.B. Richtung und Stärke eines Windes.

Zielfernrohre sind mitunter zusätzlich mit einem Entfernungsmesser ausgerüstet, insbesondere mit einem Laser-Entfernungsmesser. Der Laser-Entfernungsmesser sendet einen sehr dünnen Laserstrahl aus und berechnet aus der Phasenlage des vom Zielobjekt reflektierten Strahls dessen Entfernung vom Schützen. Der Auftreffpunkt des Laserstrahls auf dem Zielobjekt kann dabei in das Zielfernrohr eingespiegelt werden, so dass der Schütze eine visuelle Kontrolle darüber hat, auf welchen Punkt er gerade zielt.

Zu diesem Zweck ist es natürlich notwendig, dass der Laserstrahl und die Visierlinie des Zielfernrohrs exakt parallel ausgerichtet sind (wenigstens für große Entfernungen, bei denen die Parallaxe keine Rolle spielt) oder zusammenfallen. Im letztgenannten Fall ist der Entfernungsmesser mindestens so weit in das Zielfernrohr integriert, dass der Laserstrahl teilweise in den Strahlengang des Zielfernrohrs eingeblendet ist.

Wenn nun aber durch Verstellen der Türme die Zielmarke und damit die Visierlinie des Zielfernrohrs verstellt wird, geht diese Parallelität zwischen bzw. das Zusammenfallen von Visierlinie und Laserstrahl verloren. Der Laserstrahl trifft dann in einem Punkt am Zielobjekt auf, der neben dem gerade anvisierten Zielpunkt liegt.

Aus der Druckschrift DE 44 38 955 C2 (= US 5,771,623 A) ist ein Zielfernrohr bekannt, das zur Beseitigung dieses Nachteils vorsieht, den Entfernungsmesser in das Zielfernrohr zu integrieren, wobei der Laserstrahl auch durch das Objektiv des Zielfernrohrs läuft, das hier zum Verstellen der Visierlinie verstellt wird. Damit ist sichergestellt, dass der Laserstrahl und die Visierlinie auch nach einem Verstellen der Visierlinie unverändert zusammenfallen. Der Laser-Sendestrahl wird über einen ersten Strahlenteiler in den Strahlengang des Zielfernrohrs eingeblendet und der Laser-Empfangsstrahl über einen zweiten Strahlenteiler aus dem Strahlengang ausgeblendet. Es sind daher bei diesem System zwingend zwei Strahlenteiler erforderlich.

Eine ähnliche Lösung ist auch aus der Druckschrift WO 00/77554 A1 (= US 6,583,862 A) bekannt. Dort ist der Integrationsgrad des Entfernungsmessers geringer. Dieser ist als andockbare Einheit ausgebildet, die seitlich an dem Zielfernrohr befestigt werden kann, was - im Gegensatz zu der Lösung gemäß der Druckschrift DE 44 38 955 C2 - auch die Möglichkeit eines Nachrüstens eröffnet. Der angedockte Entfernungsmesser ist über eine seitliche Öffnung in dem Zielfernrohr optisch mit diesem verbunden. Der Laserstrahl wird auch hier mittels zweier Strahlenteiler in den Strahlengang des Zielfernrohrs ein- und aus diesem ausgeblendet, von denen sich der eine im Zielfernrohr und der andere im angedockten Entfernungsmesser befindet. Zur Verstellung der Visierlinie dient hier ein schwenkbar gelagertes Innenrohr, das unter anderem ein Umkehrsystem und den einen Strahlenteiler enthält.

Bei diesen beiden bekannten Konzepten sind, wie bereits erwähnt, jeweils zwei Strahlenteiler zwingend erforderlich, die in einem vorbestimmten Teilungsverhältnis stehen. Je nach Wahl des Teilungsverhältnisses verliert man entweder Sende- oder Empfangsleistung, in jedem Falle aber führt dies zu einer Einbuße an Reichweite. Ferner ist für dieses Konzept charakteristisch, dass sowohl der Laser-Sendestrahl als auch der Laser-Empfangsstrahl zusammen mit dem visuellen Empfangsstrahl durch das Objektiv hindurchtreten. Das führt zu Reflektionen des Laser-Sendestrahls am Objektiv und damit zu falschem Empfang (sog. Eigenstörungen).

Aus den Druckschriften DE 28 41 622 C1 und der DE 36 39 326 C2 sind noch Anordnungen für Panzer bekannt, bei denen ein Entfernungsmesser als zu der Visiereinrichtung der Panzerkanone vollkommen separate Einheit am Panzer befestigt und in seiner Ausrichtung motorisch einstellbar ist.

Die eingangs genannte Druckschrift DE 1 210 360 B beschreibt eine mit einem Laser-Entfernungsmesser gekoppelte Visiervorrichtung. Bei dieser Vorrichtung ist oben auf dem Zielfernrohr ein Laser-Sender angeordnet, in dessen Strahlengang sich ein eine bikonkave Linse eines Galilei-Systems befindet, das offensichtlich zur Aufweitung des Strahles eines Festkörper-Lasers dient, wie er zum Zeitpunkt der Entstehung dieser Druckschrift üblicherweise verwendet wurde. Diese Linse ist in vertikaler und in horizontaler Richtung quer zur optischen Achse des Laser-Senders verschiebbar. Im Strahlengang des Zielfernrohrs ist unterhalb dieser Linse eine Strichplatte angeordnet, die ebenfalls in vertikaler und in horizontaler Richtung quer zur optischen Achse des Zielfernrohrs verschiebbar ist. Dies geschieht in Abhängigkeit von Steuersignalen eines Rechners, der aus den vom Zielobjekt reflektierten Strahlen des Laser-Senders die Entfernung zum Zielobjekt berechnet. Die Strichplatte und die bikonkave Linse sind mechanisch gekoppelt, so dass eine Verschiebung der Strichplatte in vertikaler und/oder horizontaler Richtung eine gleiche Verschiebung der bikonkaven Linse in gleicher Richtung zur Folge hat.

Die bekannte Vorrichtung hat mehrere Nachteile.

Zum einen gestattet die unmittelbare starre Kopplung von Strichplatte und bikonkaver Linse nur eine sehr grobe Nachstellung des Mess-Sendestrahls des Laser-Senders relativ zur Visierlinie.

Ferner wandert der Mess-Sendestrahl bei einer Querverschiebung nur der Linse und bei gehäusefestem Laser-Sender und gehäusefesten weiteren Linsen des Galilei-Systems aus der optischen Mitte der bikonkaven Linse heraus, was zu einer optischen Verzerrung des Mess-Sendestrahls führt.

Weiterhin wandert durch das Verschieben der Strichplatte die Zielmarke aus dem Zentrum des Bildfeldes heraus.

Darüber hinaus ist der mechanische Aufbau schwierig zu realisieren, wenn die Strichplatte sich in der Nähe des Okulars befindet, der Laser-Sender aber möglichst in der Nähe des Objektives angeordnet sein soll.

Schließlich ist die Verwendung eines Laser-Senders mit nachgeschaltetem optischen System auch im Hinblick auf das dabei anfallende Gewicht nachteilig und durch das optische System entsteht ein erheblicher Abstand der optischen Achsen von Laser-Sender und Zielfernrohr, was wiederum große Parallaxe-Fehler zur Folge hat.

Die Druckschrift DE 33 29 589 C2 beschreibt eine weitere Visiereinrichtung mit einem Laser-Sender, bei dem die optische Achse des Laser-Senders durch seitliches Verschieben eines im Strahlengang des Laser-Senders befindliches Drehkeilpaars verschwenkbar ist. Dies geschieht servomotorisch in Abhängigkeit von Signalen eines Rechners, der die Drehstellung eines im Strahlengang des Zielfernrohrs befindlichen Spiegels erfasst.

Diese Einrichtung hat damit den gleichen Nachteil wie oben bereits erörtert, dass nämlich der Mess-Sendestrahl beim Verschwenken optisch verzerrt wird.

Der Erfindung liegt demgegenüber die Aufgabe zugrunde, ein Zielfernrohr der eingangs genannten Art dahingehend weiterzubilden, dass die vorgenannten Nachteile vermieden werden. Insbesondere soll ein Zielfernrohr zur Verfügung gestellt werden, bei dem eine kompakte Bauweise mit geringem Gewicht und trotzdem hoher Präzision der Entfernungsmessung auch bei großen Entfernungen möglich ist.

Bei einem Zielfernrohr der eingangs genannten Art wird diese Aufgabe erfindungsgemäß dadurch gelöst, dass die Lichtquelle schwenkbar am Zielfernrohr angeordnet ist, und dass die zweiten Mittel als zwischen dem Zielfernrohr und der Lichtquelle wirkendes Getriebe ausgebildet sind.

Die der Erfindung zugrunde liegende Aufgabe wird auf diese Weise vollkommen gelöst.

Die Erfindung sieht nämlich vor, die gesamte Lichtquelle des Entfernungsmessers zu verschwenken und nicht nur ein optisches Element in dessen Strahlengang zu verschieben. Damit bleiben die optischen Eigenschaften der Lichtquelle vollkommen erhalten. Dies wird in besonders einfacher Weise durch die getriebliche Kopplung der schwenkbar am Zielfernrohr befestigten Lichtquelle mit dem Zielfernrohr erreicht.

Das erfindungsgemäße Zielfernrohr weist wesentliche Vorteile gegenüber herkömmlichen Zielfernrohren auf, bei denen die Visierlinie über das Objektiv verstellt wird. Es integriert den Entfernungsmesser, ohne dass dabei die herkömmliche Form und Handhabung verloren geht, an die die Benutzer gewöhnt sind. Dabei werden keine Zugeständnisse hinsichtlich des Gewichtes gemacht, weil das erfindungsgemäße Zielfernrohr beispielsweise mit einem Gesamtgewicht von etwa 1.000 g herstellbar ist.

Bei einer bevorzugten Ausgestaltung der Erfindung sind die ersten Mittel zum manuellen Verstellen der Richtung der Visierlinie vorgesehen, wobei vorzugsweise die ersten Mittel ein erstes Verstellelement für eine Ausrichtung der Visierlinie in einer Horizontalebene sowie ein zweites Verstellelement für eine Ausrichtung der Visierlinie in einer Vertikalebene aufweisen.

Diese Maßnahme hat den Vorteil, dass in an sich bekannter Weise mit so genannten "Türmen" für die Einstellung eines horizontalen bzw. eines vertikalen Versatzes der Visierlinie gearbeitet werden kann. Das schließt natürlich andere Verstellmöglichkeiten, beispielsweise eine servomotorische Verstellung nicht aus.

Besonders bevorzugt sind Ausführungsbeispiele der Erfindung, bei denen der Entfernungsmesser gegenläufig zur Visierlinie verschwenkt wird.

Diese Maßnahme hat den Vorteil, dass eine Bauform gewählt werden kann, bei der die Verstellung der Visierlinie im Bereich der ersten Bildebene vorgenommen wird, in der das Bild des Zielobjektes auf dem Kopf steht.

Im Rahmen der vorliegenden Erfindung ist das Getriebe insbesondere als Hebelgetriebe ausgebildet.

Diese Maßnahme hat den Vorteil, dass kompakte, spielfreie und reibungsarme Elemente verwendet werden können, deren Bewegung unmittelbar von der Verstellung der Visierlinie, beispielsweise vom Verdrehen der "Türme" abgeleitet werden kann und die daher keine separate Energiezufuhr benötigen.

Eine besonders gute Wirkung wird erzielt, wenn die Lichtquelle an einem objektivseitigen Ende des Zielfernrohrs und ein Umkehrsystem an einem okularseitigen Ende des Zielfernrohrs gelenkig gelagert und die einander zu weisenden freien Enden von Lichtquelle und Umkehrsystem über einen Hebel gelenkig miteinander verbunden sind.

Diese Maßnahme hat den Vorteil, dass eine besonders kompakte Bauform mit kurzem Hebelgetriebe entsteht.

Bei dem vorgenannten Ausführungsbeispiel ist besonders bevorzugt, wenn die Lichtquelle am objektivseitigen Ende des Zielfernrohrs in einem Kugellager und vorzugsweise das Umkehrsystem am okularseitigen Ende des Zielfernrohrs in einem Kegel/Kugellager gelagert ist.

Diese Maßnahme hat den Vorteil, dass die für eine zweiachsige Verstellung der Visierlinie notwendige Lagerung mit einfachen Mitteln erreicht wird.

Bevorzugte Weiterbildungen dieses Ausführungsbeispiels mit Hebelgetriebe zeichnen sich dadurch aus, dass der Hebel starr mit dem freien Ende der Lichtquelle und gelenkig mit dem freien Ende des Umkehrsystems verbunden ist.

Diese Maßnahme hat den Vorteil, dass die im Bereich des Hebels erforderliche Gelenkigkeit auf ein Gelenk reduziert wird, wobei dieses Gelenk sich im Bereich des Umkehrsystems befindet, wo ein ausreichender Bauraum dafür zur Verfügung steht.

Dabei ist bevorzugt, wenn der Hebel in einer ersten Richtung justierbar mit dem freien Ende der Lichtquelle verbunden ist, insbesondere dadurch, dass der Hebel an seinem objektivseitigen Ende mit einer ersten Gabel versehen ist, dass erste Zinken der ersten Gabel einen Stutzen am freien Ende der Lichtquelle umfassen, und dass die ersten Zinken in ihrer Längsrichtung auf dem Stutzen verschiebbar und in einer vorgegebenen Position fixierbar sind.

Diese Maßnahme hat den Vorteil, dass eine Justierung des Hebelgetriebes in einer ersten Richtung, vorzugsweise in Seitenrichtung in einfacher Weise möglich ist, nämlich durch Verschieben und Fixieren der Gabel auf dem Stutzen, beispielsweise durch Festschrauben mittels einer Mutter auf einem Gewindestutzen.

In analoger Weise kann bei einer weiteren Ausführungsform der Erfindung der Hebel an seinem okularseitigen Ende mit einer zweiten Gabel versehen sein, wobei zweite Zinken der zweiten Gabel mit Längsnuten versehen sind, und mit dem Umkehrsystem verbundene Stifte in den Längsnuten laufen.

Diese Maßnahme hat den Vorteil, dass die erforderliche Gelenkigkeit im Bereich des Hebels mit einem einzigen und sehr einfach aufgebauten Gelenk ermöglicht wird, das den Anforderungen an Spielfreiheit und Reibungsarmut genügt.

Für die Ausführungsbeispiele mit den gabelförmigen Enden des Hebels gilt bevorzugt, dass die erste Gabel mit ihren ersten Zinken eine erste Ebene definiert, dass die zweite Gabel mit ihren zweiten Zinken eine zweite Ebene definiert, und dass die erste Ebene mit der zweiten Ebene einen rechten Winkel einschließt. Dabei ist weiter bevorzugt, dass der Hebel ein objektivseitiges vorderes Teil sowie ein okularseitiges hinteres Teil aufweist, und dass die Teile in einer zweiten Richtung justierbar miteinander verbunden sind, wobei insbesondere die erste Richtung mit der zweiten Richtung einen rechten Winkel einschließt. Das vordere Teil ist dabei bevorzugt mit der ersten Gabel und das hintere Teil mit der zweiten Gabel versehen.

Diese Maßnahme hat den Vorteil, dass die Verstellbarkeit und die Justierbarkeit zwischen den beiden vom Hebel verbundenen Baugruppen in zwei senkrecht aufeinander stehenden Richtungen mit einem Minimum an Bauelementen gewährleistet ist.

Eine gute Wirkung wird bei den vorgenannten Ausführungsbeispielen dadurch erzielt, dass das freie Ende des Umkehrsystems durch das freie Ende eines Innenrohrs des Zielfernrohrs gebildet wird.

Diese Maßnahme hat den Vorteil, dass alle im Innenrohr gehaltenen Bauelemente, insbesondere die Umkehrgruppe und die Strichplatte, in ihrer Lage zueinander unverändert bleiben, wenn die Ziellinie verstellt wird.

Bei weiteren bevorzugten Weiterbildungen der Erfindung ist das Getriebe als Seilzuggetriebe oder als eine Servomotorik ausgebildet.

Diese Maßnahmen haben den Vorteil, dass je nach dem im Einzelfall tragbaren Aufwand eine entsprechend zuverlässige und präzise Kopplung von Zielfernrohr und Entfernungsmesser erreicht werden kann.

Auch bei den vorgenannten Getriebearten ist bevorzugt, wenn das Getriebe im Zielfernrohr an einem Umkehrsystem angreift.

Bei anderen Ausführungsbeispielen der Erfindung weist das Getriebe ein von einer Brennweite des Zielfernrohrs abhängiges Übersetzungsverhältnis auf.

Diese Maßnahme hat den Vorteil, dass insbesondere bei Varioobjektiven immer die für die jeweilige Brennweite optimale Getriebeübersetzung eingestellt werden kann.

Schließlich wird eine besonders einfache Bauform erreicht, wenn der Entfernungsmesser kardanisch am Zielfernrohr gelagert ist.

Bei Ausführungsbeispielen der Erfindung ist bevorzugt, wenn die Lichtquelle eine Laserdiode aufweist.

Diese Maßnahme hat den Vorteil, dass ein Bauelement eingesetzt wird, dessen Lichtstrahl keiner aufwendigen Optik bedarf, so dass eine leichte und schmale Bauform möglich wird. Dadurch vermindert sich im Vergleich zu bekannten Anordnungen auch die Parallaxe.

Dabei ist bevorzugt, wenn die Lichtquelle eine Brennweite von etwa 12 mm aufweist.

Diese Maßnahme hat den Vorteil, dass eine äußerst kurze Bauform entsteht, die auch für große Entfernungen im Bereich von 1.000 m und mehr mit hoher Präzision arbeitet.

Das Zielfernrohr weist bevorzugt ein Objektiv auf, dessen mindestens eine Linse fest in einem Außenrohr des Zielfernrohrs angeordnet ist.

Diese Maßnahme hat den Vorteil, dass das Objektiv dicht ausgebildet ist. Wenn bevorzugt noch eine Verspiegelung hinzugefügt wird, kann die Transmissionseigenschaft optimiert werden, nämlich für den sichtbaren Bereich sowie für die Wellenlänge des Laser-Lichts des Entfernungsmessers.

Das erfindungsgemäße Zielfernrohr weist bevorzugt eine Stromversorgung mit einer Batterie auf, bei der die Batterie an ihrem Pluspol axial elastisch gehalten ist.

Diese Maßnahme hat den Vorteil, dass langlebige Batterien eingesetzt werden können, bei denen bauartbedingt der Pluspol auf einem keramischen Bauteil sitzt, das bei einer Stoßbelastung ansonsten beschädigt werden könnte.

Dabei ist die Batterie bevorzugt in einem Hohlraum angeordnet, der eine rückwärtige Fortsetzung des Entfernungsmessers bildet.

Diese Maßnahme hat den Vorteil, dass eine kompakte Bauform entsteht.

Bei Ausführungsbeispielen der Erfindung weist das Umkehrsystem in an sich bekannter Weise an seinem objektivseitigen Ende einen Strahlenteiler auf.

Der Strahlenteiler ist dabei vorzugsweise mit einem ersten Prisma sowie einem zweiten Prisma versehen, die in einer Grenzebene aneinander liegen, wobei die Grenzebene mit der optischen Achse einen Winke im Bereich von 50° bis 70° einschließt und der Winkel (α) insbesondere etwa 60° beträgt.

Diese Maßnahme hat den Vorteil, dass im Gegensatz zu herkömmlichen Anordnungen mit 45° Winkel der Schichtenaufbau im Bereich der Grenzebene deutlich vereinfacht werden kann. Mit dieser Beschichtung ist eine optimale Ausspiegelung des Laserlichts und eine optimale Transmission des sichtbaren Lichts möglich. So liegt beispielsweise der Reflexionsgrad für einen Teilerwürfel mit 60° für eine Wellenlänge von 905 nm bei 90% im Vergleich zu etwa 60% bei einer Bauweise mit 45°.

Dabei ist bevorzugt, wenn in der Grenzebene ein Schichtenaufbau maximal sechzig, vorzugsweise maximal vierzig Einzelschichten aufweist.

Der Schichtenaufbau besteht dabei bevorzugt aus abwechselnden Hafnium-Einzelschichten und Siliziumoxid-Einzelschichten.

Bei Ausführungsformen dieses Strahlenteilers wird ein entlang der optischen Achse auf das objektivseitige erste Prisma auftreffender Mess-Empfangsstrahl an der Grenzebene aus der optischen Achse abgelenkt, durchläuft das erste Prisma, tritt an einer Oberfläche des ersten Prismas aus und wird auf einen Sensor geleitet, dessen Sensoroberfläche parallel zu der Oberfläche angeordnet ist. Dabei wird er Mess-Empfangsstrahl vorzugsweise lotrecht auf die Sensoroberfläche abgelenkt.

Diese Maßnahme hat den Vorteil, dass der Strahlengang optimiert ist und der Sensor mit dem besten Wirkungsgrad beaufschlagt wird.

Besonders bevorzugt ist dabei, wenn das erste Prisma an seiner objektivseitigen unteren Kante mit einer abgeflachten Ecke versehen ist, deren Oberfläche derart zur optischen Achse angewinkelt ist, dass ein entlang der optischen Achse einfallender Mess-Empfangsstrahl, der an der angewinkelten Grenzebene reflektiert wird, lotrecht auf die Oberfläche der abgeflachten Ecke trifft.

Diese Maßnahme hat den Vorteil, dass der Austritt des Mess-Empfangsstrahls aus dem ersten Prisma optimiert ist.

Weiter bevorzugt ist dem Sensor ein Bandpassfilter vorgeschaltet, das vorzugsweise zwischen dem ersten Prisma und dem Sensor angeordnet ist.

Diese Maßnahme hat den Vorteil, dass das Eindringen von Falschlicht in den Sensor minimiert wird.

In diesem Zusammenhang ist bevorzugt, wenn das Bandpassfilter als Kantenfilter ausgebildet ist, insbesondere wenn das Kantenfilter aus zwei aufeinander gekitteten Einzelfiltern besteht.

Diese Maßnahme hat den Vorteil, dass eine besonders flache und effektive Bauform entsteht.

Bei Ausführungsformen der Erfindung definiert eine okularseitige Oberfläche des okularseitigen zweiten Prismas eine zweite Bildebene des Zielfernrohrs.

In diesem Falle wird ein entlang der optischen Achse auf das objektivseitige erste Prisma auftreffender Mess-Empfangsstrahl in einem Auftreffpunkt an der Grenzebene aus der optischen Achs abgelenkt, durchläuft das erste Prisma, tritt an einer Oberfläche des ersten Prismas aus und wird auf eine Sensoroberfläche eines Sensors geleitet. Dabei ist der Abstand des Auftreffpunktes von der zweiten Bildebene vorzugsweise gleich groß wie der Abstand des Auftreffpunktes von der Sensoroberfläche.

Diese Maßnahme hat den Vorteil, dass ein zentriertes Absehen immer in der Mitte des Bildfeldes ermöglicht wird.

Bei dieser Bauform ist bevorzugt, wenn eine Feldlinse auf die okularseitige Oberfläche des zweiten Prismas aufgekittet ist.

Diese Maßnahme hat den Vorteil, dass zwischen Strahlenteiler und Feldlinse keine Verschmutzung eintreten kann. Ferner können zwei Entspiegelungsschichten eingespart werden. Zudem erlangt man eine hohe Transmission, da ein luftgefüllter Raum entfällt.

Es ist ferner bevorzugt, wenn der Strahlenteiler in dem Umkehrsystem durch Formschluss verdrehsicher angeordnet ist.

Bei Ausführungsformen der Erfindung ist das Umkehrsystem am okularseitigen Ende des Zielfernrohrs in einem Kegel-/Kugellager gelagert.

Diese Maßnahme hat den bereits weiter oben erwähnten Vorteil, dass die erforderliche Gelenkigkeit durch einfache bauliche Maßnahmen erreicht werden kann.

Dabei ist bevorzugt, wenn das Kegel-/Kugellager durch einen Innenkegelsitz auf einer Innenoberfläche eines Außenrohrs des Zielfernrohrs und durch einen Kugelkopf gebildet wird, der am okularseitigen Ende eines Innenrohrs des Zielfernrohrs angeordnet ist. Der Kugelkopf ist dabei vorzugsweise mittels einer Feder gegen das Außenrohr abgestützt.

Diese Maßnahme hat den Vorteil, dass die erforderlichen Bauelemente auf minimalem Raum angeordnet werden können

Bei der erfindungsgemäßen Bauform ist bevorzugt am okularseitigen Ende des Umkehrsystems eine zweite Bildebene gebildet.

Dabei ist bevorzugt eine Strichplatte mindestens näherungsweise am Ort der zweiten Bildebene im Umkehrsystem angeordnet.

Die Strichplatte ist dabei vorzugsweise starr mit dem Umkehrsystem verbunden.

Bei dem vorgenannten Beispiel ist bevorzugt auf der mindestens näherungsweise in der zweiten Bildebene befindlichen Okularseite der Strichplatte ein Display für eine alphanumerische Anzeige im Bildfeld angeordnet.

Diese Maßnahme hat gegenüber herkömmlichen Anordnungen mit neben dem Bildfeld angeordneten Display, das in das Bildfeld eingespiegelt werden muss, den Vorteil, dass kein weiterer Strahlenteiler mit zugehöriger Optik zum Einspiegeln benötigt wird. Auch dies trägt zu einer hohen Transmission bei, ebenso wie zu einem geringeren Gewicht und zu niedrigeren Herstellkosten.

Erfindungsgemäß kann die Strichplatte in an sich bekannter Weise beleuchtbar sein, wobei die Intensität der Beleuchtung einstellbar ist. Dabei ist die Lichtintensität der alphanumerischen Anzeige des Displays bevorzugt in Abhängigkeit von der Intensität der Beleuchtung der Strichplatte einstellbar.

Diese Maßnahme hat den Vorteil, dass das Licht des Displays das Bild des Zielobjektes nicht überstrahlen kann.

Bei dem vorgenannten Ausführungsbeispiel ist vorzugsweise zum Einstellen der Intensität der Beleuchtung der Strichplatte mindestens ein Betätigungsknopf am Zielfernrohr angeordnet, wobei mit dem mindestens einen Betätigungsknopf zugleich die Beleuchtung ein- und ausschaltbar ist.

Diese Maßnahme hat den Vorteil, dass mit wenigen Betätigungselementen mehrere Funktionen ausgeübt werden können.

Dies gilt insbesondere dann, wenn zum Erhöhen bzw. zum Vermindern der Intensität der Beleuchtung der Strichplatte zwei Betätigungsknöpfe vorgesehen sind und die Beleuchtung durch gleichzeitiges Betätigen beider Betätigungsknöpfe ein- bzw. ausschaltbar ist.

Ferner ist bevorzugt bei einem erfindungsgemäßen Zielfernrohr ein Schalter zum Betätigen des Entfernungsmessers vorgesehen, wobei der Schalter die Abgabe eines kurzzeitigen Mess-Sendestrahls bewirkt, und Mittel vorgesehen sind, um eine Abgabe eines weiteren Mess-Sendstrahls erst nach Ablauf eines vorbestimmten Zeitintervalls zu ermöglichen.

Diese Maßnahme hat den Vorteil, dass die Schutzvorschriften der betreffenden Laserklasse eingehalten werden können.

Dabei ist ferner bevorzugt, wenn der Schalter fernsteuerbar ist.

Diese Maßnahme hat den Vorteil, dass das Zielfernrohr mit beliebigen Feuerwaffen kombinierbar ist und ein Schütze beispielsweise eine Entfernungsmessung aus der Deckung heraus durchführen kann.

Das erfindungsgemäße Zielfernrohr ist schließlich bevorzugt mit einer Schiene zum Befestigen an einer Feuerwaffe versehen, wobei die Schiene und der Entfernungsmesser an um 90° gegeneinander versetzten Umfangspositionen des Zielfernrohrs angeordnet sind.

Diese Maßnahme hat den Vorteil, dass bei normaler Gebrauchsstellung des Zielfernrohrs oben auf dem Lauf einer Feuerwaffe der Entfernungsmesser seitlich angeordnet ist, so dass die gesamte Höhe der Anordnung begrenzt ist.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1:: eine äußerst schematisierte Draufsicht eines Ausführungsbeispiels eines erfindungsgemäßen Zielfernrohrs;
- Figur 2:: eine Draufsicht auf eine praktische Realisierung des in Figur 1 dargestellten Zielfernrohrs;
- Figur 3:: eine erste Seitenansicht des Zielfernrohrs von Figur 2;
- Figur 4:: eine Ansicht des Zielfernrohrs von Figur 2, von unten;
- Figur 5:: eine zweite Seitenansicht des Zielfernrohrs von Figur 2;
- Figur 6:: in vergrößertem Maßstab eine Ansicht des Zielfernrohrs von Figur 2, von der Okularseite her;
- Figur 7:: in ebenfalls vergrößertem Maßstab eine Ansicht des Zielfernrohrs von Figur 2, von der Objektivseite her;
- Figur 8:: einen Horizontalschnitt des Zielfernrohrs von Figur 2;
- Figur 9:: in vergrößertem Maßstab einen ersten Ausschnitt aus dem objektivseitigen Bereich des Horizontalschnitts von Figur 8;
- Figur 10:: in vergrößertem Maßstab einen zweiten Ausschnitt aus dem mittleren, unteren Bereich des Horizontalschnitts von Figur 8;
- Figur 11:: eine perspektivische Darstellung eines Hebels;
- Figur 12:: in vergrößertem Maßstab einen dritten Ausschnitt aus dem mittleren, oberen Bereich des Horizontalschnitts von Figur 8;
- Figur 13:: in vergrößertem Maßstab einen vierten Ausschnitt aus dem okularseitigen Bereich des Horizontalschnitts von Figur 8; und
- Figur 14:: in vergrößertem Maßstab einen Radialschnitt in der Ebene XIV-XIV von Figur 8.

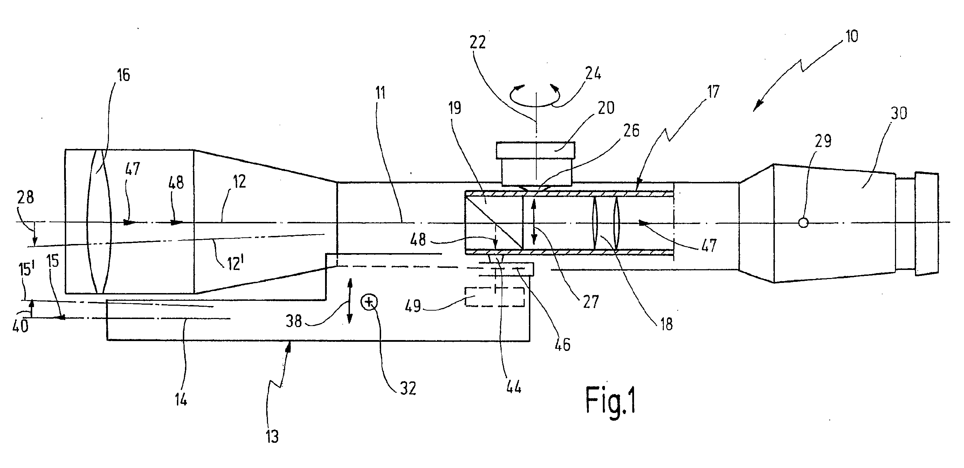

In Figur 1 bezeichnet 10 als ganzes ein Zielfernrohr. Das Zielfernrohr hat eine optische Achse 11. Eine Visierlinie 12 des Zielfernrohrs 10 fällt in dessen Grundseinstellung mit der optischen Achse 11 zusammen.

An dem Zielfernrohr 10 ist ein Entfernungsmesser 13, insbesondere ein Laser-Entfernungsmesser, befestigt. Der Entfernungsmesser 13 hat eine Längsachse 14 und ist derart am Zielfernrohr 10 angeordnet, dass ein von ihm entlang der Längsachse 14 ausgesandter Mess-Sendestrahl 15 im Normalfall parallel zur optischen Achse 11 und damit auch parallel zur Visierlinie 12 verläuft. Damit trifft der Mess-Sendestrahl 15 das Zielobjekt genau an dem Punkt, der in der Visierlinie 12 liegt.

In dem Zielfernrohr 10 befindet sich auf der von einem Objektiv 16 abgewandten Seite ein relativ zur optischen Achse schwenkbar gelagertes Innenrohr 17. Das Innenrohr 17 ist mit seinem objektivseitigen freien Ende um einen Drehpunkt 29 in horizontaler und in vertikaler Richtung verschwenkbar. Der Drehpunkt 29 befindet sich im Bereich eines Okulars 30 des Zielfernrohrs 10. In dem Innenrohr 17 sind ein Umkehrsystem 18 sowie ein Strahlenteiler 19 angeordnet.

Zum Verstellen des Innenrohrs 17 und damit der Visierlinie 12 ist das Zielfernrohr 10 mit zwei um 90° am Umfang versetzten Türmen 20, 21 versehen, von denen in Figur 1 bei 20 nur einer gezeigt ist. Der Turm 20 ist um eine Achse 22 von Hand drehbar, wie mit einem Pfeil 24 angedeutet. Dadurch wird ein Übertragungselement 26 in horizontaler Richtung verfahren, das an dem Innenrohr 17 angreift und dieses im vorderen Bereich gegenüber der optischen Achse 11 seitlich verschwenkt, wie mit einem Pfeil 27 angedeutet. Bei einer Betätigung des vertikalen Turms 21 ergibt sich eine entsprechende Bewegung des Innenrohrs 17 in vertikaler Richtung.

Das in Figur 1 dargestellte seitliche Verschwenken des Innenrohrs 17 nach links, vom Okular aus gesehen, hat zur Folge, dass die Visierlinie von 12 nach 12' verstellt wird, wie mit einem Pfeil 28 gezeigt.

Damit durch das Verstellen der Visierlinie von 12 nach 12' die Zuordnung des Mess-Sendestrahls 15 zum anvisierten Zielobjekt nicht verloren geht, wird der Entfernungsmesser 13 um ein Gelenk 38 verschwenkt, über das er am Zielfernrohr 10 befestigt ist. Die Verschwenkbewegung muss dabei gegenläufig sein, weil das Bild des Zielobjektes in der ersten Bildebene auf dem Kopf steht und die erste Bildebene sich innerhalb des Umkehrsystems 18 befindet. Das Gelenk 38 ist bevorzugt ein Kardangelenk, so dass der Entfernungsmesser 13 mit seiner Längsachse 14 sowohl einer horizontalen als auch einer vertikalen Verstellung der Visierlinie 12, 12' zu folgen vermag.

Damit wird der Mess-Sendestrahl 14 nach 14' verschwenkt, wie mit einem Pfeil 40 angedeutet.

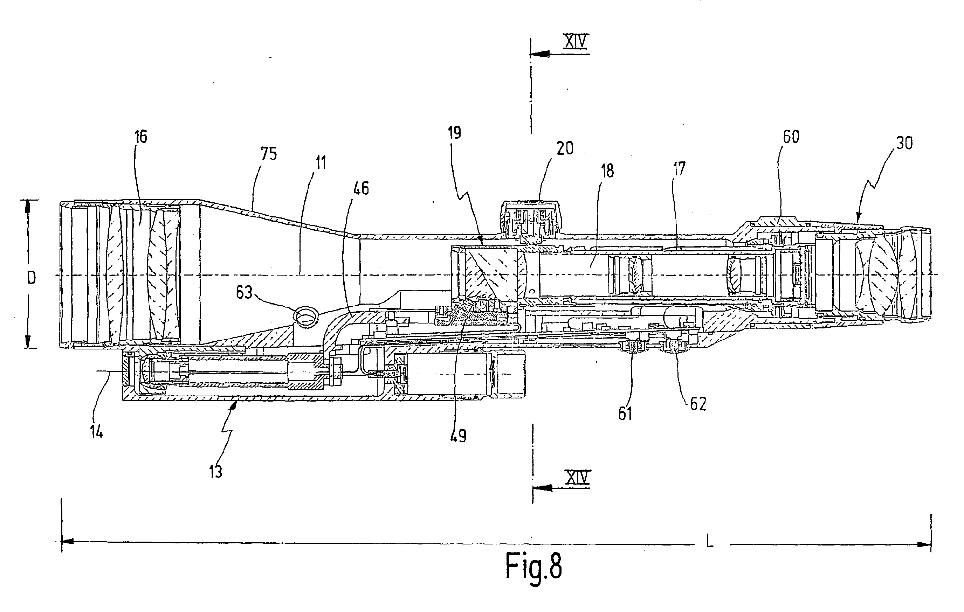

Damit der Entfernungsmesser 13 der Verstellbewegung der Visierlinie selbsttätig folgen kann, ist am Innenrohr 17 ein weiteres Übertragungselement 44 angeordnet, dass beispielsweise mit einem Hebel 46 zusammenwirkt, der wiederum die Bewegung des Entfernungsmessers 13 um das Gelenk 32 bewirkt. Für diese Getriebeverbindung lassen sich unterschiedliche Getriebe verwenden, beispielsweise neben dem bereits angedeuteten Hebelgetriebe auch Seilzuggetriebe oder eine Servomotorik. Die Getriebeübersetzung wird zweckmäßigerweise in Abhängigkeit von der Brennweite des Zielfernrohrs 10 eingestellt. Ein bevorzugtes Ausführungsbeispiel der Erfindung verwendet ein spielfreies und reibungsarmes Hebelgetriebe. Dieses wird weiter unten anhand der Figuren 8 bis 11 noch näher erläutert.

Das vom Zielobjekt reflektierte Licht, bestehend aus einem visuellen Signal 47 und einem Mess-Empfangsstrahl 48, tritt über das Objektiv 15 in das Zielfernrohr 10 ein. Es wird dann am Strahlenteiler 18 geteilt, wobei der Mess-Empfangsstrahl 48 auf einen Empfänger 49 im Entfernungsmesser 13 gelangt und dort verarbeitet wird. Alternativ kann der Mess-Empfangsstrahl aber auch direkt vom Entfernungsmesser empfangen werden.

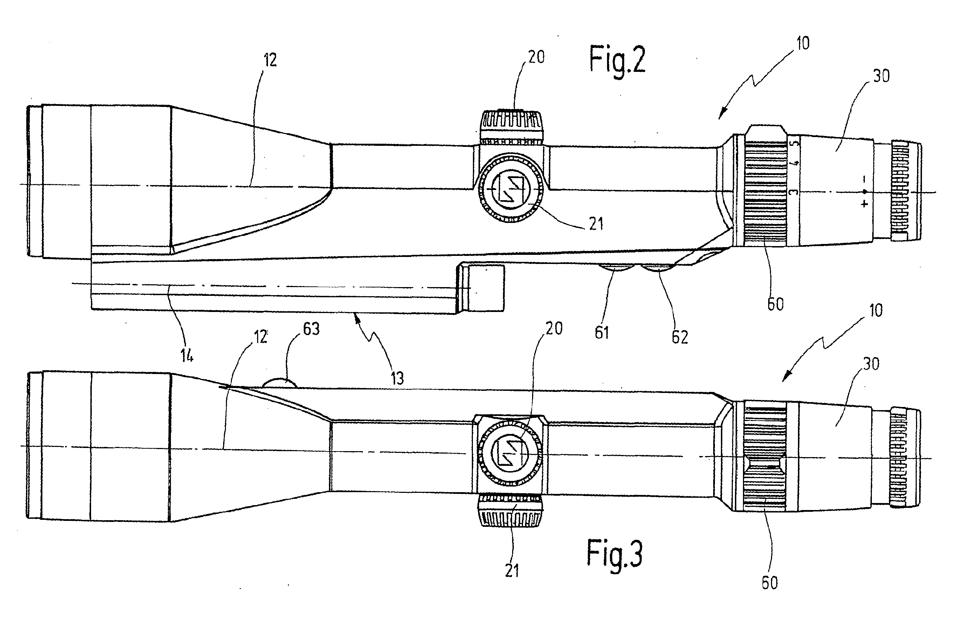

Nachfolgend soll nun ein praktisches Ausführungsbeispiel des in Figur 1 nur äußerst schematisch dargestellten Zielfernrohrs 10 anhand der Figuren 2 bis 14 beschrieben werden. Dabei werden für gleiche Elemente gleiche Bezugszeichen verwendet.

Zunächst sollen die von außen erkennbaren Elemente des Zielfernrohrs 10 anhand der Figuren 2 bis 7 erläutert werden.

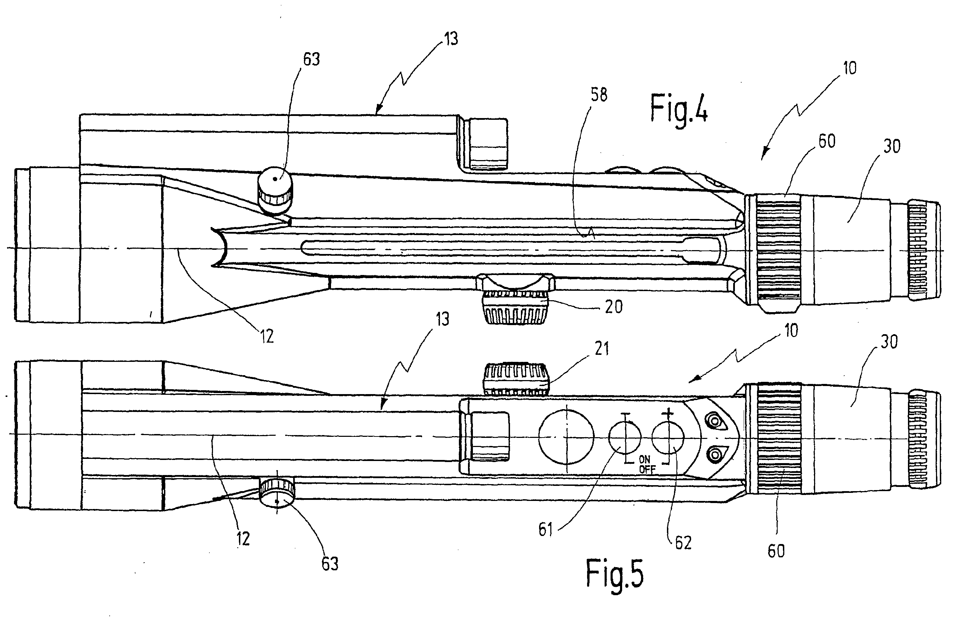

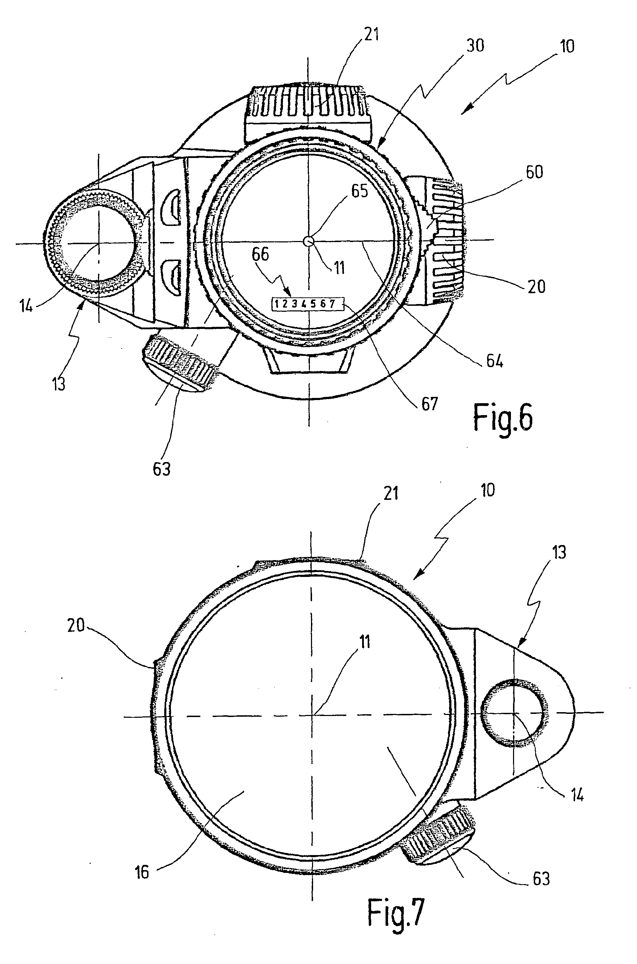

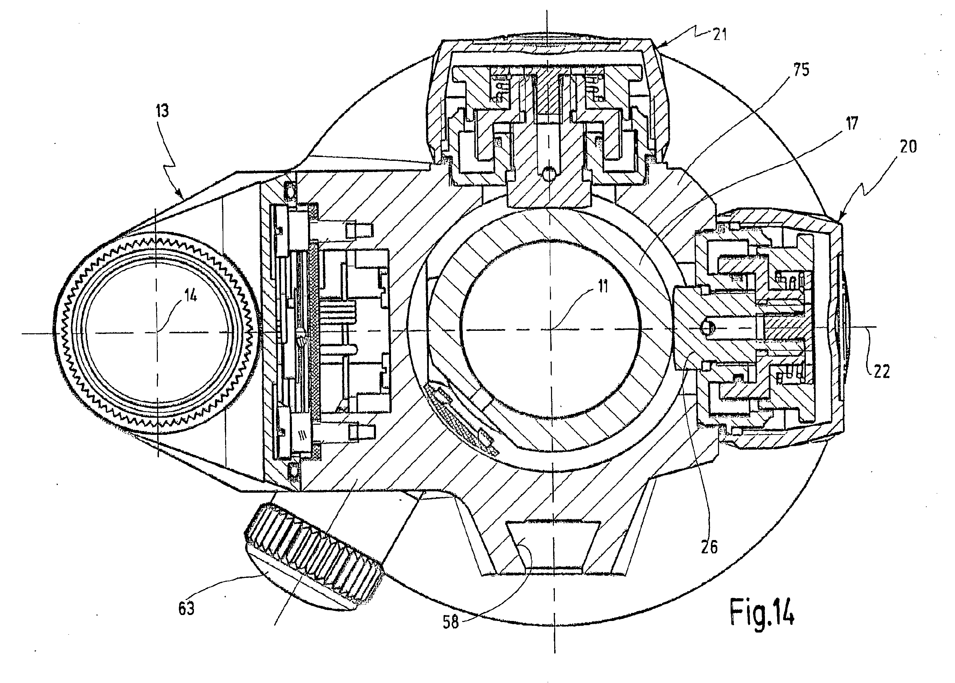

Das Zielfernrohr 10 wird mittels eine in Figur 4 und 14 deutlich erkennbaren Schiene 58 oben auf einen Lauf eines Feuerwaffe, insbesondere eines Gewehrs, aufgesetzt und dort befestigt. Dann befindet sich der Entfernungsmesser 13, vom Schützen, also von der Okularseite her gesehen, auf der linken Seite des Zielfernrohrs 10, wie man deutlich aus Figur 6 erkennt. Die Schiene 58 ist bevorzugt von einer Bauart, wie sie in der DE 38 20 471 C2 beschrieben ist, auf deren Offenbarung der Einfachheit halber verwiesen werden darf.

Am okularseitigen Ende des Zielfernrohrs befindet sich ein Ring 60 zum Verstellen einer Vergrößerung des Zielfernrohrs. Es handelt sich hier um einen so genannten "V-Wechsler". Der Ring 60 bewirkt über einen Mitnehmerstift und eine Kulisse, dass Linsen im Okular 30, beispielsweise zwei Linsen, axial verschoben werden, so dass sich die Gesamtvergrößerung des Zielfernrohrs 10 entsprechend ändert. In Figur 2 ist hierzu neben dem Ring 60 eine Skala für den Vergrößerungsfaktor zu erkennen.

Auf der, vom Schützen aus gesehen, linken Seite des Zielfernrohrs 10 befinden sich zwei Knöpfe 61 und 62, wie man besonders deutlich aus Figur 5 erkennt. Die Knöpfe 61 und 62 dienen zum Ein- und Ausschalten der Elektronik des Zielfernrohrs 10 und gestatten eine Einstellung der Intensität der Beleuchtung des Absehens, wie noch erläutert werden wird.

Am objektivseitigen Ende des Zielfernrohrs 10 ist auf der, vom Schützen aus gesehen, linken Seite schräg unten ein Schalter 63 vorgesehen, der besonders deutlich in den Figuren 4 bis 7 zu erkennen ist. Der Schalter 63 dient zum Einschalten und Betätigen des Entfernungsmessers 13. Der Entfernungsmesser 13 ist unmittelbar nach dem Einschalten betriebsbereit, d.h. die Entfernungsmessung wird ohne merkliche Wartezeit (≤ 100 msec) praktisch unmittelbar nach dem Betätigen des Schalters 63 ausgelöst. Durch Betätigen des Schalters wird ein Lichtblitz des im Entfernungsmesser 13 enthaltenen Lasers ausgelöst und die Entfernung berechnet sowie angezeigt. Wegen der Schutzvorschriften für die Laserklasse 1 kann die nächste Messung frühestens nach Ablauf eines Zeitintervalls von 3 sec ausgeführt werden. Der Entfernungsmesser bleibt vorzugsweise nach dem ersten Einschalten in einem Standby-Betrieb. Zur Minimierung des Stromverbrauchs kann dabei eine Abschaltautomatik vorgesehen sein.

Der Schalter 63 ist derart ausgebildet, dass an ihn auch ein Stecker eines Kabels angeschlossen werden kann, um eine Fernauslösung des Entfernungsmessers 13 zu bewirken.

Figur 6 zeigt eine Ansicht des Zielfernrohrs aus der Sicht des Schützen. Im Okular 30 sieht der Schütze ein Absehen mit einer Zielmarke, im dargestellten Ausführungsbeispiel einem Fadenkreuz 64, dessen Zentrum mit einem Punkt 65 markiert ist. Der Punkt 65 kann in an sich bekannter Weise beleuchtet werden.

Unterhalb der Zielmarke befindet sich ein Display 66, das zur Anzeige alphanumerischer Symbole dient. Das Display 66 ist vorzugsweise mit einer 7-Segment-Anzeige versehen. Auf dem Display 66 kann z.B. die vom Entfernungsmesser 13 ermittelte Entfernung als Zahlenwert mit Einheitenangabe, z.B. "630 m" angezeigt werden.

Wie bereits erwähnt wurde, kann die Intensität der Beleuchtung des Absehens, im dargestellten Beispiel also des Punktes 65, mittels der Knöpfe 61 (+) und 62 (-) vergrößert bzw. verringert werden. Besonders bevorzugt ist dabei, wenn bei einer Verstellung der Intensität der Beleuchtung des Punktes 65 zugleich automatisch die Intensität der Leuchtkraft des Displays 66 nachgeführt wird. Wenn also beispielsweise ein Jäger bei aufkommender Dämmerung das Absehen dunkler einstellt, vermindert sich damit automatisch auch die Helligkeit des Displays 66. Dadurch wird eine Überstrahlung des Bildfeldes durch das Display 66 verhindert.

Wenn die Knöpfe 61 und 62 gleichzeitig betätigt werden, wird die Elektronik des Zielfernrohrs 10 insgesamt ein- bzw. ausgeschaltet.

Anhand der Figuren 8 bis 14 sollen nun konstruktive Einzelheiten des Zielfernrohrs 10 beschrieben werden.

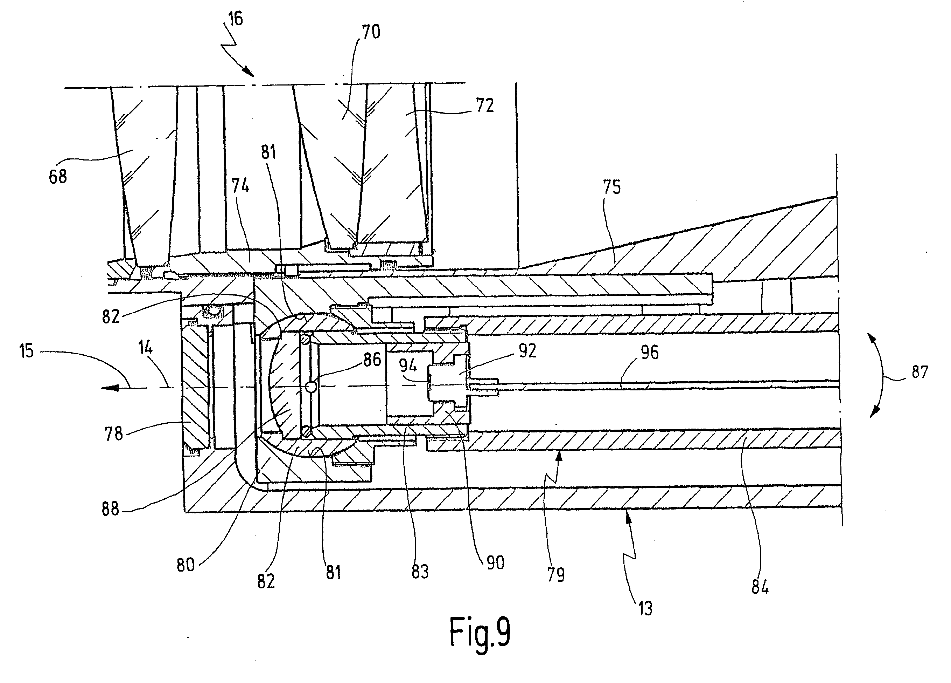

Figur 8 ist dabei als detaillierter Horizontalschnitt eine Darstellung ähnlich Figur 1 und zeigt in einer Gesamtansicht weitere Einzelheiten des Ausführungsbeispiels des Zielfernrohrs 10. Vier Bereiche der Figur 8 sind in den Figuren 9, 10, 12 und 13 in vergrößertem Maßstab gezeigt. Das Zielfernrohr 10 gemäß Figur 8 hat eine Gesamtlänge L = 365 mm. Der Außendurchmesser im Bereich des Objektivs 16 beträgt D = 62 mm. Alle nachstehend angegebenen Maße, Toleranzen und dgl. beziehen sich auf diese Abmessungen.

Figur 9 zeigt den Bereich links unten in Figur 8, und zwar im wesentlichen das vordere Ende des Entfernungsmessers 13.

Das Objektiv 16 weist im dargestellten Ausführungsbeispiel drei Linsen 68, 70 und 72 auf. Die Linsen 68, 70 und 72 sind in einem Tubus 74 befestigt, beispielsweise eingekittet. Da der Tubus 74 seinerseits fest mit einem Außenrohr 75 des Zielfernrohrs 10 verbunden ist, sind die Linsen 68, 70 und 72 starr mit diesem Außenrohr 75 verbunden. Sie werden daher beim Verstellen der Visierlinie 12 nicht bewegt. Der Innenraum des Zielfernrohrs 10 ist daher nach vorne vollständig abgedichtet.

Das Objektiv 16 ist entspiegelt, d.h. in seiner Transmission optimiert für den sichtbaren Bereich sowie für einen Wellenlängenbereich zwischen 900 und 910 nm Wellenlänge.

Der Entfernungsmesser 13 weist ein Außenrohr 76 auf, das seitlich an das Außenrohr 75 angesetzt ist. Das Außenrohr 76 ist an seiner in Figur 9 linken Stirnseite mit einem Fenster 78 versehen. Innerhalb des Außenrohres 76 befindet sich ein so genannter Lightpen 79, d.h. eine Lichtquelle, die einen dünnen Lichtstrahl aussendet. Der Lightpen 79 ist mit seinem vorderen Ende schwenkbar am Außenrohr 76 gelagert.

Mit dem Außenrohr 76 ist hierzu eine Lagerschale 80 verbunden, die zwei kugelkappenförmige Lagersitze 81 aufweist. Die Lagersitze 81 nehmen einen Kugelkopf 82 auf, der vorne auf eine Hülse 83 aufgesteckt ist, die koaxial zur Achse 14 des Entfernungsmessers 13 angeordnet ist. Die Hülse 84 wiederum sitzt vorne koaxial auf einem Innenrohr 84 des Lightpens 79. Das von dem Lagersitz 81 und dem Kugelkopf 82 gebildete Lager hat einen Drehpunkt 86. Das Innenrohr 84, und damit der Lightpen 79, kann daher mit seinem in Figur 9 linken freien Ende sowohl in horizontaler als auch in vertikaler Richtung verschwenkt werden. Die Verschwenkbewegung in horizontaler Richtung ist in Figur 9 mit einem Pfeil 87 angedeutet.

Der Kugelkopf 82 hält ferner noch eine Linse 88, die zentrisch auf der Achse 14 des Entfernungsmessers 13 sitzt. An dem in Figur 9 rechten Ende der Hülse 83 ist koaxial eine Halterung 90 für eine Laserdiode 92 befestigt. Die Laserdiode 92 hat in Figur 9 links einen in der Achse 14 liegenden Leuchtpunkt 94. Damit kann die Laserdiode 92 in der in Figur 9 gezeigten Ausrichtung des Innenrohrs 84 koaxial zur Achse 14 den Mess-Sendestrahl 15 entlang der Achse 14 aussenden. Der Mess-Sendestrahl hat vorzugsweise eine Wellenlänge im Bereich um etwa 900 nm.

Die Laserdiode 92 hat bevorzugt eine extrem kurze Brennweite von beispielsweise etwa 12 mm. Dementsprechend kann die Linse 88, die das Objektiv bildet, einen Durchmesser von ca. 10 mm haben. Die Baulänge des Lightpens 79 kann damit kurz gehalten werden. Er kann für Entfernungen zum Zielobjekt von mehr als 800 m, unter Umständen auch mehr als 1.000 m und darüber eingesetzt werden. In der Praxis dürfte die Untergrenze der Entfernungsmessung bei ca. 10 m liegen.

An der Rückseite der Laserdiode 92 ist eine Platine 96 angeschlossen. Die Platine 96 trägt die für die Versorgung und Ansteuerung der Laserdiode 92 erforderlichen elektronischen Bauelemente (nicht dargestellt).

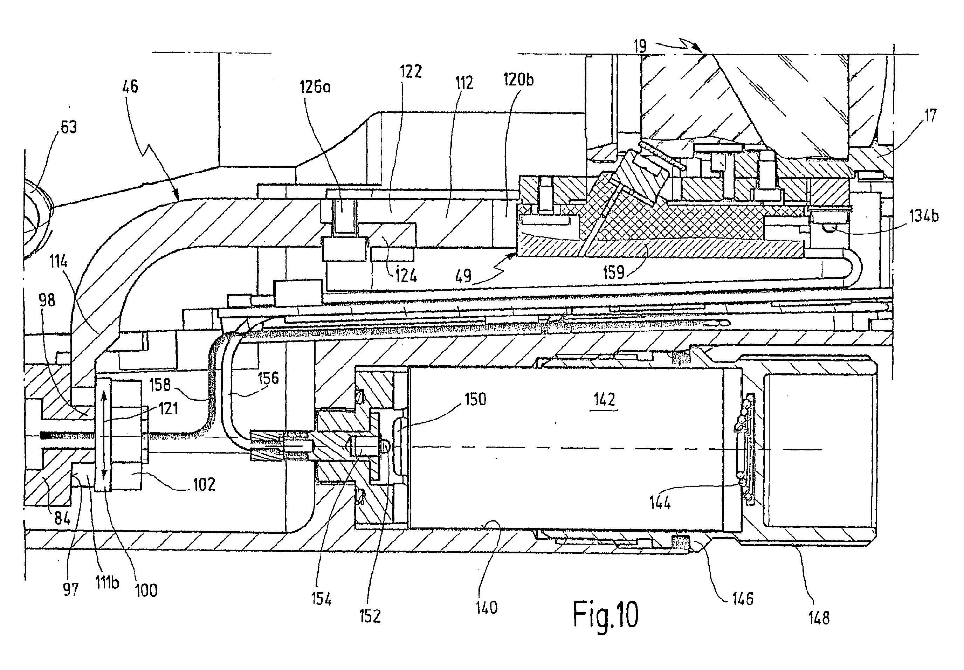

Figur 10 zeigt den Bereich Mitte unten in Figur 8, und zwar im wesentlichen das Getriebe mit dem Hebel 46.

Das Innenrohr 84 des Entfernungsmessers 13 läuft an seinem in Figur 10 rechten Ende über eine Ringschulter 97 in einen Gewindestutzen 98 aus. Auf den Gewindestutzen 98 sind eine Unterlegscheibe 100 aufgesteckt und eine Mutter 102 aufgeschraubt, die zur Befestigung des in Figur 10 linken Endes des Hebels 46 dienen.

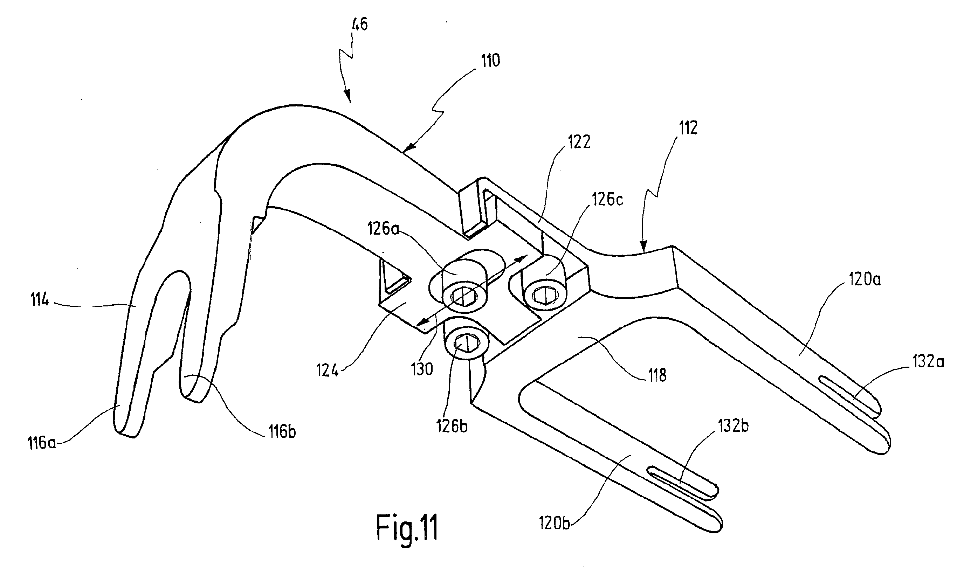

Der Hebel 46 ist separat perspektivisch in Figur 11 dargestellt. Der Hebel 46 besteht aus zwei Teilen, nämlich einem in Figur 11 links gezeigten vorderen Teil 110 sowie einem dort rechts gezeigten hinteren Teil 112. Das vordere Teil 110 läuft an seinem freien Ende in eine erste Gabel 114 aus, die um 90° abgebogen ist. Ihre ersten Zinken 116a, 116b weisen daher in Figur 11 nach unten und definieren eine Vertikalebene, die quer zur Achse 14 verläuft. Das hintere Teil 112 läuft an seinem freien Ende in eine zweite Gabel 118 aus, deren zweite Zinken 120a, 120b in Figur 11 eine Horizontalebene definieren, die parallel zur Achse 11 verläuft.

Die ersten Klauen 116a und 116 b sind auf den Gewindestutzen 98 aufgesteckt. Die erste Gabel 114 kann durch Anziehen der Mutter 102 dort fixiert und in horizontaler Richtung justiert werden, wie mit einem Pfeil 121 angedeutet.

Das hintere Teil 112 weist an dem in Figur 11 linken Ende eine Klaue 122 auf, die sich um einen Flansch 124 am rechten Ende des vorderen Teils 110 legt. Mittels Justierschrauben 126a, 126b und 126c können die Teile 110 und 112 miteinander verschraubt und dabei in vertikaler Richtung justiert werden, wie mit einem Pfeil 130 angedeutet.

Die zweiten Klauen 120a und 120b sind mit Längsnuten 132a und 132b versehen. In diesen Längsnuten 132a und 132b laufen im eingebauten Zustand des Hebels 46 Zapfen 134a und 134b, die fest mit dem Innenrohr 17 des Zielfernrohrs 10 verbunden sind und von denen einer in Figur 10 mit 134b eingezeichnet ist.

Der Hebel 46 bildet ein spielfreies und reibungsarmes Getriebe, das die Verschwenkbewegung des Innenrohrs 17 des Umkehrsystems des Zielfernrohrs 10 gegenläufig auf das Innenrohr 84 des Lightpens 79 des Entfernungsmessers 13 überträgt. Wenn nämlich das objektivseitige freie Ende des Innenrohrs 17 durch Betätigen des ersten Turms 20 seitlich (in der Darstellung der Figur 10 nach unten) verstellt wird, nehmen die in den Längsnuten 132a, 132b laufenden Stifte 134a und 134b die zweite Gabel 118 nach unten mit. Weil die zweite Gabel 118 starr mit der ersten Gabel 114 und diese ebenfalls starr mit dem Innenrohr 84 verschraubt ist, folgt das okularseitige freie Ende des Innenrohrs 84 dieser Bewegung. Da die Innenrohre 17 und 84 an entgegen gesetzten Enden schwenkbar gelagert sind und mit ihren aneinander gekoppelten freien Enden einander zu weisen, führt das zu einer gegenläufigen Bewegung, bei der z.B. ein Verschwenken des Innenrohrs 17 nach links zu einem Verschwenken des Innenrohrs 84 nach rechts führt. Entsprechend führt z.B. ein Verschwenken des Innenrohrs 17 nach unten zu einem Verschwenken des Innenrohrs 84 nach oben.

Bei einem praktischen Ausführungsbeispiel des Zielfernrohrs 10 führte diese Kopplung zu einer Genauigkeit des Entfernungsmessers von 0,5 m bei einer Entfernung von 1.000 m.

Figur 10 zeigt ferner noch die Versorgung des Zielfernrohrs 10 mit elektrischer Energie.

Das Außenrohr 76 des Entfernungsmessers 13 ist an seinem rückwärtigen Ende mit einem beispielsweise zylindrischen Hohlraum 140 versehen, Der Hohlraum 140 dient zur Aufnahme einer Batterie 142, die vorzugsweise eine Photobatterie ist. Die Batterie 142 wird an ihrem in Figur 10 rechten Ende von einer Feder 144 gehalten, die auf der Innenseite eine Schraubkappe 146 angeordnet ist. Die Schraubkappe 146 kann manuell eingeschraubt werden und ist zu diesem Zweck an ihrem freien Ende mit einer äußeren Rändelung 148 versehen.

Ein Pluspol 150 der Batterie 142 ist im dargestellten Beispiel links angeordnet. Er wird von einem Kontaktstift 152 berührt, der über eine Feder 154 im Gehäuse abgestützt ist. Auf diese Weise wird vermieden, dass beim Einwirken eines Stoßes in axialer Richtung eine zu große Kraft auf den Pluspol 150 ausgeübt wird, die eine Beschädigung des keramischen Bauelementes bewirken könnte, das bei Batterien der hier interessierenden Bauart unterhalb des Pluspols angeordnet ist. Ein erstes Kabel 156 führt vom Kontaktstift 152 zu einer Platine 159, auf der unter anderem der Empfänger 49 angeordnet ist. Ein zweites Kabel 158 verbindet die Platine 159 mit dem Entfernungsmesser 13.

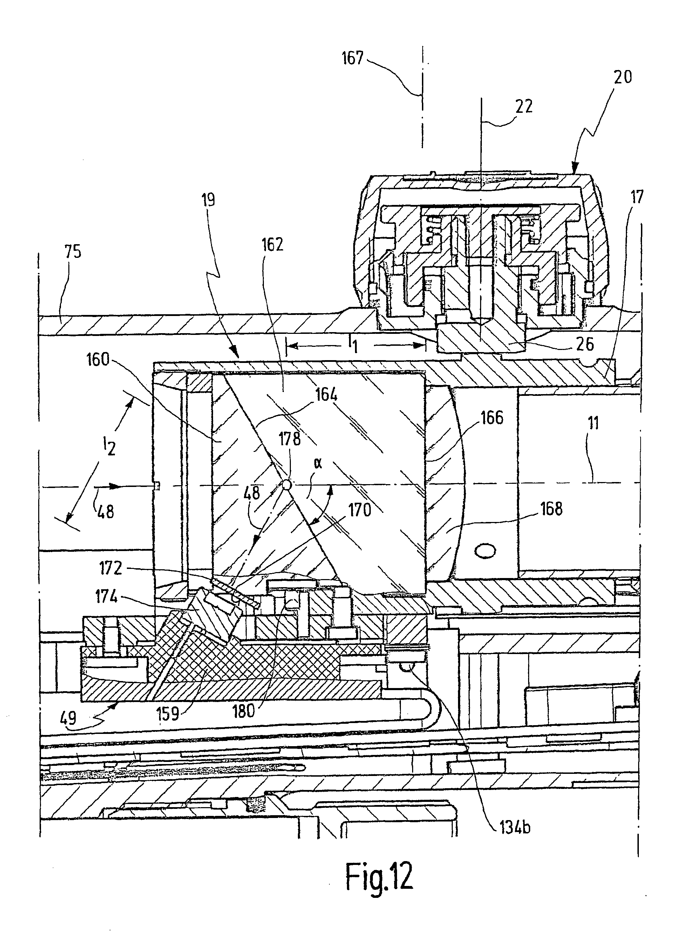

Figur 12 zeigt den Bereich Mitte oben in Figur 8, und zwar im wesentlichen den Strahlenteiler 19.

Der Strahlenteiler 19 besteht im wesentlichen aus einem objektivseitigen ersten Prisma 160 sowie einem okularseitigen zweiten Prisma 161, die entlang einer Grenzebene 164 aneinander liegen. Die Grenzebene 164 schließt mit der optischen Achse 11 anstatt des sonst üblichen Winkels von 45° einen Winkel α ein, der im Bereich von 50° bis 70° liegt und vorzugsweise etwa 60° beträgt.

Mit einem derartigen Strahlenteiler 19 kann der Schichtenaufbau im Bereich der Grenzebene 164 deutlich vereinfacht werden. Der Strahlenteiler 19 optimiert die Transmission im visuellen Bereich sowie im Bereicht des Lichts mit der Wellenlänge der Laserdiode 92. Bei einem herkömmlichen Strahlenteiler mit einem Winkel von 45° müssen für eine optimale Strahlenteilung ca. 80 Schichten aufgebracht werden. Das erfordert einen sehr sensiblen Aufdampfungsprozess. Dabei besteht die Gefahr eines instabilen Schichtaufbaus, dessen Einzelschichten zum Reißen neigen. Außerdem ist dieser Prozess sehr teuer, weil der Kostenaufwand mit der Anzahl der Einzelschichten ansteigt. Bei einem Strahlenteiler mit einem Winkel von etwa 60° zur Achse bzw. etwa 30° zu einer Radialebene kann die Anzahl der Schichten hingegen auf ca. 60, unter Umständen sogar auf 40 reduziert werden. Eine weitere Verminderung ergäbe sich, wenn der Winkel von 60° noch weiter erhöht bzw. der Einfallswinkel von 30° noch weiter vermindert würde, allerdings unter Inkaufnahme eines höheren Platzbedarfs.

Die Schichten sind erfindungsgemäß bevorzugt aus Hafnium- und Siliziumoxiden aufgebaut und zwar abwechselnd. Es wird eine möglichst geringe Schichtdicke angestrebt, um das Auftreten von Streulicht zu minimieren.

Bei einem praktischen Ausführungsbeispiel liegt der Reflexionsgrad für einen 60°/30°-Strahlenteiler bei 90% für Licht von 905 nm Wellenlänge. Bei einem herkömmlichen 45°-Strahlenteiler würde dieser Wert nur bei 60% liegen.

Eine okularseitige Oberfläche 163 des zweiten Prismas 160 definiert die erste Bildebene 167 des Zielfernrohrs 10. Auf die Oberfläche 163 ist eine Feldlinse 168 aufgekittet. Dies hat den Vorteil, dass sich zwischen dem zweitem Prisma 160 und der Feldlinse 168 kein Schmutz absetzen kann. Ferner werden zwei Entspiegelungsschichten eingespart. Da es keinen luftgefüllten Raum zwischen dem zweiten Prisma 160 und der Feldlinse 168 gibt, erlangt man auch eine hohe Transmission.

Eine in Figur 12 linke untere Ecke 170 des ersten Prismas 160 ist um etwa 30° zur optischen Achse 11 abgeschrägt. Parallel zu dieser Ecke befindet sich dort ein Kantenfilter 172, das vorzugsweise aus zwei aufeinander gekitteten Einzelkantenfiltern besteht. Das Kantenfilter 172 stellt ein Bandpassfilter dar, das nur Licht in einem schmalen Wellenlängenbereich von beispielsweise 905 nm ± 3-5 nm, d.h. der Wellenlänge des Lichtes der Laserdiode 92 durchlässt.

Unterhalb des Kantenfilters 172 sitzt ein Sensor 174, d.h. ein für die Wellenlänge des Lichtes der Laserdiode 92 empfindliches Element. Der Sensor weist beispielsweise eine Empfangsfläche mit einem Durchmesser von 0,2 mm auf. Bei einer Brennweite von 150 mm entspricht dies einem Öffnungswinkel von 1,7 mrad. Der Sensor ist auf den Mess-Empfangsstrahl 48 ausgerichtet, der in der Darstellung von Figur 12 entlang der optischen Achse 11 durch das Zielfernrohr 10 läuft und an der um 60° geneigten Grenzebene 164 in einem Auftreffpunkt 178 reflektiert wird, um dann unter 90° Einfallswinkel durch das Kantenfilter 172 hindurch auf den Sensor 174 aufzutreffen.

Der Sensor 174 ist relativ zur ersten Bildebene 167 ausjustiert, und zwar derart, dass der Abstand l₁ zwischen dem Auftreffpunkt 178 und der ersten Bildebene 167 gleich dem Abstand l₂ zwischen dem Auftreffpunkt 178 und dem Sensor 174 ist. Dabei ist im dargestellten Beispiel eine Toleranz von ± 3 mm zulässig. Dadurch werden Bildfehler vermieden.

Der Sensor 174 ist zusammen mit dem Empfänger 49 und der Platine 159 direkt am Umkehrsystem 18, nämlich am Innenrohr 17, befestigt. Er muss damit nur ein mal beim Montieren justiert werden.

Der Strahlenteiler 19 ist durch mechanischen Formschluss verdrehsicher am Umkehrsystem 18 befestigt. Dies ist in Figur 12 durch einen Nippel 180 angedeutet.

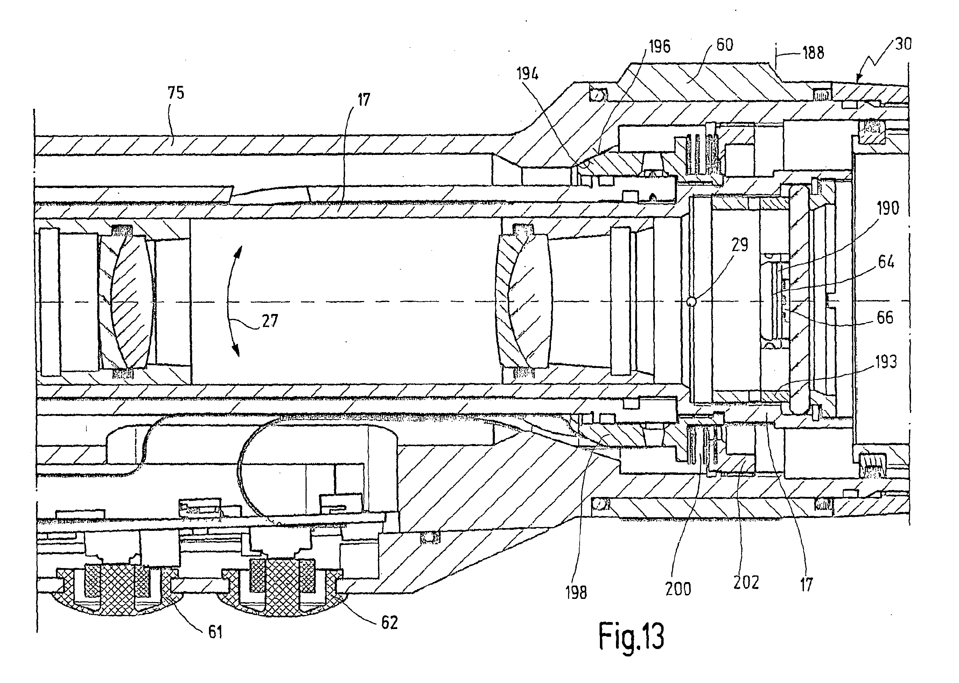

Figur 13 zeigt den Bereich rechts in Figur 8, und zwar im wesentlichen die Lagerung des Innenrohrs 17.

Eine zweite Bildebene 188 ist in Figur 13 an der axialen Position einer Strichplatte 190 zu erkennen, wobei eine axiale Toleranz von ± 1 mm zulässig ist. Die Strichplatte 190 trägt die Zielmarke, im dargestellten Beispiel also das bereits in Zusammenhang mit Figur 6 erwähnt Fadenkreuz 64. Ferner befindet sich an der Strichplatte 190, unterhalb der Zeichenebene von Figur 13, das Display 66. Durch diese Anordnung des Displays 66 unmittelbar im Bildfeld ist kein weiterer Strahlenteiler im Strahlengang mit entsprechendem Gewicht und Transmissionsverlust notwendig.

Die Strichplatte 190 ist im Gegensatz zu vielen herkömmlichen Zielfernrohren fest mit dem Umkehrsystem 18 verbunden. Hierzu ist ein ringförmiger Rahmen 193 vorgesehen, mit dem die Strichplatte 190 starr mit dem Innenrohr 17 verbunden ist. Auf diese Weise ist das Absehen immer in der Mitte des Bildfeldes zentriert.

An dem Außenrohr 75 des Zielfernrohrs 10 ist kurz vor der zweiten Bildebene 188 innen ein Kegelsitz 194 ausgeformt. An diesem Kegelsitz 194 liegt ein Kugelkopf 196 an, der am vorderen Ende eines ersten Ringflansches 198 ausgebildet ist. Der erste Ringflansch 198 sitzt fest auf dem Innenrohr 17. Er ist axial mittels einer Wellenfeder 200 in Richtung zum Objektiv 16 vorgespannt, so dass der Kugelkopf 196 mit der Kraft der Wellenfeder 200 an dem Kegelsitz 194 anliegt. Die Wellenfeder 200 stützt sich okularseitig an einem zweiten Ringflansch 202 ab, der mit dem Außenrohr 75 verbunden ist.

Der Kegelsitz 194 bildet daher mit dem Kugelkopf 196 ein Gelenk, dessen Drehpunkt 29 bereits in Figur 1 gezeigt ist. Das Umkehrsystem 18 kann auf diese Weise um den Drehpunkt 29 am okularseitigen Ende des Innenrohrs 17 verschwenkt werden, so dass das objektivseitige freie Ende des Innenrohrs 17 mit dem Strahlenteiler 19 und dem Empfänger 49 in horizontaler und in vertikaler Richtung verschwenkt werden können, wie auch in Figur 13 mit einem Pfeil 27 angedeutet. Durch Mitnahme der zweiten Gabel 118 über die fest mit dem Strahlenteiler 19 verbundenen Stifte 134a und 134b wird der Hebel 46 gegenläufig zum Innenrohr 17 verschwenkt und damit der Lightpen 79 so verstellt, dass der Mess-Sendestrahl 15 stets das anvisierte Zielobjekt trifft.

Figur 14 zeigt mit weiteren Einzelheiten einen Radialschnitt in der Höhe der Türme 20 (Seite) und 21 (Höhe) mit deren Einwirkung auf die Ausrichtung des Innenrohrs 17. Ferner ist deutlich die Lage der Messelektronik zwischen dem Entfernungsmesser 13 und dem Innenrohr 17 zu erkennen, ebenso wie die Ausbildung und Positionierung der Schiene 58.

## Patentansprüche

1. Zielfernrohr mit einer optischen Achse (11) und mit einer Visierlinie (12, 12'), mit ersten Mitteln (20 - 26) zum Verstellen der Richtung der Visierlinie (12, 12'), mit einem mit dem Zielfernrohr (10) baulich verbundenen Entfernungsmesser (13), der eine Lichtquelle (79) zum Aussenden eines Mess-Sendestrahls (14, 14') aufweist, wobei der Mess-Sendestrahl (14, 14') außerhalb des Zielfernrohrs (10) verläuft und dessen Richtung mit der Richtung der Visierlinie (12, 12') im wesentlichen übereinstimmt, und mit zweiten Mitteln zum selbsttätigen Nachführen der Richtung des Mess-Sendestrahls (14, 14') beim Verstellen der Richtung der Visierlinie (12, 12'), **dadurch gekennzeichnet, dass** die Lichtquelle (79) schwenkbar am Zielfernrohr (10) angeordnet ist, und dass die zweiten Mittel als zwischen dem Zielfernrohr (10) und der Lichtquelle (79) wirkendes Getriebe (34, 36) ausgebildet sind.

2. Zielfernrohr nach Anspruch 1, **dadurch gekennzeichnet, dass** die ersten Mittel (20 - 26) zum manuellen Verstellen der Richtung der Visierlinie (12, 12') vorgesehen sind.

3. Zielfernrohr nach Anspruch 2, **dadurch gekennzeichnet, dass** die ersten Mittel ein erstes Verstellelement (20) für eine Ausrichtung der Visierlinie (12, 12') in einer Horizontalebene sowie ein zweites Verstellelement (21) für eine Ausrichtung der Visierlinie (12, 12') in einer Vertikalebene aufweisen.

4. Zielfernrohr nach einem der Ansprüche 1 bis 3, **dadurch gekennzeichnet, dass** der Entfernungsmesser (13) gegenläufig zur Visierlinie (12, 12') verschwenkt wird.

5. Zielfernrohr nach einem der Ansprüche 1 bis 4, **dadurch gekennzeichnet, dass** das Getriebe (34, 36) als Hebelgetriebe ausgebildet ist.

6. Zielfernrohr nach Anspruch 5, **dadurch gekennzeichnet, dass** die Lichtquelle (79) an einem objektivseitigen Ende des Zielfernrohrs (10) und ein Umkehrsystem (18) an einem okularseitigen Ende des Zielfernrohrs (10) gelenkig gelagert sind, und dass die einander zu weisenden freien Enden von Lichtquelle (79) und Umkehrsystem (18) über einen Hebel (46) gelenkig miteinander verbunden sind.

7. Zielfernrohr nach Anspruch 6, **dadurch gekennzeichnet, dass** die Lichtquelle (79) am objektivseitigen Ende des Zielfernrohrs (10) in einem Kugellager (80 - 82) gelagert ist.

8. Zielfernrohr nach Anspruch 6 oder 7, **dadurch gekennzeichnet, dass** das Umkehrsystem (18) am okularseitigen Ende des Zielfernrohrs (10) in einem Kegel/Kugellager (194, 196) gelagert ist.

9. Zielfernrohr nach einem der Ansprüche 6 bis 8, **dadurch gekennzeichnet, dass** der Hebel (46) starr mit dem freien Ende der Lichtquelle (79) und gelenkig mit dem freien Ende des Umkehrsystems (18) verbunden ist.

10. Zielfernrohr nach Anspruch 9, **dadurch gekennzeichnet, dass** der Hebel (46) in einer ersten Richtung justierbar mit dem freien Ende der Lichtquelle (79) verbunden ist.

11. Zielfernrohr nach Anspruch 10, **dadurch gekennzeichnet, dass** der Hebel (46) an seinem objektivseitigen Ende mit einer ersten Gabel (114) versehen ist, dass erste Zinken (116a, 116b) der ersten Gabel (114) einen Stutzen (98) am freien Ende der Lichtquelle (79) umfassen, und dass die ersten Zinken (116a, 116b) in ihrer Längsrichtung auf dem Stutzen (98) verschiebbar und in einer vorgegebenen Position fixierbar sind.

12. Zielfernrohr nach einem der Ansprüche 7 bis 11, **dadurch gekennzeichnet, dass** der Hebel (46) an seinem okularseitigen Ende mit einer zweiten Gabel (118) versehen ist, dass zweite Zinken (120a, 120b) der zweiten Gabel (118) mit Längsnuten (132a, 132b) versehen sind, und dass mit dem Umkehrsystem (18) verbundene Stifte (134a, 134b) in den Längsnuten (132a, 132b) laufen.

13. Zielfernrohr nach Anspruch 11 und 12, **dadurch gekennzeichnet, dass** die erste Gabel (114) mit ihren ersten Zinken (116a, 116b) eine erste Ebene definiert, dass die zweite Gabel (118) mit ihren zweiten Zinken (120a, 120b) eine zweite Ebene definiert, und dass die erste Ebene mit der zweiten Ebene einen rechten Winkel einschließt.

14. Zielfernrohr nach einem der Ansprüche 10 bis 13, **dadurch gekennzeichnet, dass** der Hebel (46) ein objektivseitiges vorderes Teil (110) sowie ein okularseitiges hinteres Teil (112) aufweist, und dass die Teile (110, 112) in einer zweiten Richtung justierbar miteinander verbunden sind.

15. Zielfernrohr nach Anspruch 14, **dadurch gekennzeichnet, dass** die erste Richtung mit der zweiten Richtung einen rechten Winkel einschließt.

16. Zielfernrohr nach Anspruch 11 und 14, **dadurch gekennzeichnet, dass** das vordere Teil (110) mit der ersten Gabel (114) versehen ist.

17. Zielfernrohr nach Anspruch 12 und 14, **dadurch gekennzeichnet, dass** das hintere Teil (112) mit der zweiten Gabel (118) versehen ist.

18. Zielfernrohr nach einem der Ansprüche 6 bis 17, **dadurch gekennzeichnet, dass** das freie Ende des Umkehrsystems (18) durch das freie Ende eines Innenrohrs (17) des Zielfernrohrs gebildet wird.

19. Zielfernrohr nach einem der Ansprüche 1 bis 4, **dadurch gekennzeichnet, dass** das Getriebe als Seilzuggetriebe ausgebildet ist.

20. Zielfernrohr nach einem der Ansprüche 1 bis 4, **dadurch gekennzeichnet, dass** das Getriebe als eine Servomotorik ausgebildet ist.

21. Zielfernrohr nach Anspruch 19 oder 20, **dadurch gekennzeichnet, dass** das Getriebe im Zielfernrohr an einem Umkehrsystem angreift.

22. Zielfernrohr nach einem der Ansprüche 1 bis 21, **dadurch gekennzeichnet, dass** das Getriebe (34, 36) ein von einer Brennweite des Zielfernrohrs (10) abhängiges Übersetzungsverhältnis aufweist.

23. Zielfernrohr nach einem der Ansprüche 1 bis 22, **dadurch gekennzeichnet, dass** die Lichtquelle (79) eine Laserdiode (92) aufweist.

24. Zielfernrohr nach einem der Ansprüche 1 bis 23, **dadurch gekennzeichnet, dass** die Lichtquelle (79) eine Bennweite von etwa 12 mm aufweist.

25. Zielfernrohr nach einem der Ansprüche 1 bis 24, **dadurch gekennzeichnet, dass** es ein Objektiv (16) aufweist, dessen mindestens eine Linse (68, 70, 72) fest in einem Außenrohr (75) des Zielfernrohrs (10) angeordnet ist.

26. Zielfernrohr nach einem der Ansprüche 1 bis 25, **dadurch gekennzeichnet, dass** es eine Stromversorgung mit einer Batterie (142) aufweist, und dass die Batterie (142) an ihrem Pluspol (150) axial elastisch gehalten ist.

27. Zielfernrohr nach Anspruch 26, **dadurch gekennzeichnet, dass** die Batterie (142) in einem Hohlraum (140) angeordnet ist, der eine rückwärtige Fortsetzung des Entfernungsmessers (13) bildet.

28. Zielfernrohr nach einem der Ansprüche 1 bis 27, **dadurch gekennzeichnet, dass** das Umkehrsystem (18) an seinem objektivseitigen Ende einen Strahlenteiler (19) aufweist.

29. Zielfernrohr nach Anspruch 28, **dadurch gekennzeichnet, dass** der Strahlenteiler (19) einen erstes Prisma (160) sowie ein zweites Prisma (161) aufweist, dass die Prismen (160, 161) in einer Grenzebene (164) aneinander liegen, und dass die Grenzebene (164) mit der optischen Achse (11) einen Winkel (α) im Bereich von 50° bis 70° einschließt.

30. Zielfernrohr nach Anspruch 29, **dadurch gekennzeichnet, dass** der Winkel (α) etwa 60° beträgt.

31. Zielfernrohr nach Anspruch 30, **dadurch gekennzeichnet, dass** in der Grenzebene (164) ein Schichtenaufbau maximal sechzig Einzelschichten aufweist.

32. Zielfernrohr nach Anspruch 31, **dadurch gekennzeichnet, dass** der Schichtenaufbau maximal vierzig Einzelschichten aufweist.

33. Zielfernrohr nach Anspruch 31 oder 32, **dadurch gekennzeichnet, dass** der Schichtenaufbau aus abwechselnden Hafnium-Einzelschichten und Siliziumoxid-Einzelschichten besteht.

34. Zielfernrohr nach einem der Ansprüche 29 bis 33, **dadurch gekennzeichnet, dass** ein entlang der optischen Achse (11) auf das objektivseitige erste Prisma (160) auftreffender Mess-Empfangsstrahl (48) an der Grenzebene (164) aus der optischen Achse (11) abgelenkt wird, das erste Prisma (160) durchläuft, an einer Oberfläche des ersten Prismas (160) austritt und auf einen Sensor (174) geleitet wird, dessen Sensoroberfläche parallel zu der Oberfläche angeordnet ist.

35. Zielfernrohr nach Anspruch 34, **dadurch gekennzeichnet, dass** der Mess-Empfangsstrahl (48) lotrecht auf die Sensoroberfläche abgelenkt wird.

36. Zielfernrohr nach Anspruch 35, **dadurch gekennzeichnet, dass** das erste Prisma (160) an seiner objektivseitigen unteren Kante mit einer abgeflachten Ecke (170) versehen ist, deren Oberfläche derart zur optischen Achse (11) angewinkelt ist, dass ein entlang der optischen Achse (11) einfallender Mess-Empfangsstrahl (48), der an der angewinkelten Grenzebene (164) reflektiert wird, und lotrecht auf die Oberfläche der abgeflachten Ecke (170) trifft.

37. Zielfernrohr nach einem der Ansprüche 34 bis 36, **dadurch gekennzeichnet, dass** dem Sensor (174) ein Bandpassfilter vorgeschaltet ist.

38. Zielfernrohr nach Anspruch 37, **dadurch gekennzeichnet, dass** das Bandpassfilter zwischen dem ersten Prisma (160) und dem Sensor (174) angeordnet ist.

39. Zielfernrohr nach Anspruch 38, **dadurch gekennzeichnet, dass** das Bandpassfilter als Kantenfilter (172) ausgebildet ist.

40. Zielfernrohr nach Anspruch 39, **dadurch gekennzeichnet, dass** das Kantenfilter (172) aus zwei aufeinander gekitteten Einzelfiltern besteht.

41. Zielfernrohr nach einem der Ansprüche 29 bis 40, **dadurch gekennzeichnet, dass** eine okularseitige Oberfläche (163) des okularseitigen zweiten Prismas (161) eine zweite Bildebene (188) des Zielfernrohrs (10) definiert.

42. Zielfernrohr nach Anspruch 41, **dadurch gekennzeichnet, dass** ein entlang der optischen Achse (11) auf das objektivseitige erste Prisma (160) auftreffender Mess-Empfangsstrahl (48) in einem Auftreffpunkt (178) an der Grenzebene (164) aus der optischen Achse (11) abgelenkt wird, das erste Prisma (160) durchläuft, an einer Oberfläche des ersten Prismas (160) austritt und auf eine Sensoroberfläche eines Sensors (174) geleitet wird, und dass der Abstand (l₁) des Auftreffpunktes (178) von der zweiten Bildebene (188) gleich groß wie der Abstand (l₂) des Auftreffpunktes (178) von der Sensoroberfläche ist.

43. Zielfernrohr nach Anspruch 41 oder 42, **dadurch gekennzeichnet, dass** eine Feldlinse (168) auf die okularseitige Oberfläche (163) des zweiten Prismas (161) aufgekittet ist.

44. Zielfernrohr nach einem der Ansprüche 28 bis 43, **dadurch gekennzeichnet, dass** der Strahlenteiler (19) in dem Umkehrsystem (18) durch Formschluss verdrehsicher angeordnet ist.

45. Zielfernrohr nach einem der Ansprüche 6 bis 44, **dadurch gekennzeichnet, dass** das Umkehrsystem (18) am okularseitigen Ende des Zielfernrohrs (10) in einem Kegel-/Kugellager (194, 196) gelagert ist.

46. Zielfernrohr nach Anspruch 44, **dadurch gekennzeichnet, dass** das Kegel-/Kugellager (194, 196) durch einen Innenkegelsitz (194) auf einer Innenoberfläche eines Außenrohrs (75) des Zielfernrohrs und durch einen Kugelkopf (196) gebildet wird, der am okularseitigen Ende eines Innenrohrs (17) des Zielfernrohrs (10) angeordnet ist.

47. Zielfernrohr nach Anspruch 46, **dadurch gekennzeichnet, dass** der Kugelkopf (196) mittels einer Feder (200) gegen das Außenrohr (75) abgestützt ist.

48. Zielfernrohr nach einem der Ansprüche 6 bis 47, **dadurch gekennzeichnet, dass** am okularseitigen Ende des Umkehrsystems (18) eine zweite Bildebene (188) gebildet ist.

49. Zielfernrohr nach Anspruch 48, **dadurch gekennzeichnet, dass** eine Strichplatte (190) mindestens näherungsweise am Ort der zweiten Bildebene (188) im Umkehrsystem (18) angeordnet ist.

50. Zielfernrohr nach Anspruch 49, **dadurch gekennzeichnet, dass** die Strichplatte (190) starr mit dem Umkehrsystem (18) verbunden ist.

51. Zielfernrohr nach Anspruch 49 oder 50, **dadurch gekennzeichnet, dass** auf der mindestens näherungsweise in der zweiten Bildebene (188) befindlichen Okularseite der Strichplatte (190) ein Display (66) für eine alphanumerische Anzeige im Bildfeld angeordnet ist.

52. Zielfernrohr nach Anspruch 51, **dadurch gekennzeichnet, dass** die Strichplatte (190) beleuchtbar ist, dass die Intensität der Beleuchtung einstellbar ist und dass die Lichtintensität der alphanumerischen Anzeige des Displays (66) in Abhängigkeit von der Intensität der Beleuchtung der Strichplatte (190) einstellbar ist.

53. Zielfernrohr nach Anspruch 52, **dadurch gekennzeichnet, dass** zum Einstellen der Intensität der Beleuchtung der Strichplatte (190) mindestens ein Betätigungsknopf (61, 62) am Zielfernrohr angeordnet ist, und dass mit dem mindestens einen Betätigungsknopf (61, 62) zugleich die Beleuchtung ein- und ausschaltbar ist.

54. Zielfernrohr nach Anspruch 53, **dadurch gekennzeichnet, dass** zum Erhöhen bzw. zum Vermindern der Intensität der Beleuchtung der Strichplatte (190) zwei Betätigungsknöpfe (61, 62) vorgesehen sind und dass die Beleuchtung durch gleichzeitiges Betätigen beider Betätigungsknöpfe (61, 62) ein- bzw. ausschaltbar ist.

55. Zielfernrohr nach einem der Ansprüche 1 bis 54, **dadurch gekennzeichnet, dass** ein Schalter (63) zum Betätigen des Entfernungsmessers (13) vorgesehen ist, wobei der Schalter (63) die Abgabe eines kurzzeitigen Mess-Sendestrahls (15) bewirkt, und dass Mittel vorgesehen sind, um eine Abgabe eines weiteren Mess-Sendstrahls (15) erst nach Ablauf eines vorbestimmten Zeitintervalls zu ermöglichen.

56. Zielfernrohr nach Anspruch 55, **dadurch gekennzeichnet, dass** der Schalter (63) fernsteuerbar ist.

57. Zielfernrohr nach einem der Ansprüche 1 bis 56, **dadurch gekennzeichnet, dass** es mit einer Schiene (58) zum Befestigen an einer Feuerwaffe versehen ist, und dass die Schiene (58) und der Entfernungsmesser an um 90° gegeneinander versetzten Umfangspositionen des Zielfernrohrs (10) angeordnet sind.

## Claims

1. Telescopic sight comprising an optical axis (11) and comprising a line of sight (12, 12'), comprising first means (20-26) for adjusting the direction of the line of sight (12, 12'), comprising a rangefinder (13) which is structurally connected to the telescopic sight (10) and has a light source (79) for emitting a transmitted measurement beam (14, 14'), the transmitted measurement beam (14, 14') running outside the telescopic sight (10) and its direction substantially corresponding to the direction of the line of sight (12, 12'), and comprising second means for automatically tracking the direction of the transmitted measurement beam (14, 14') upon adjustment of the direction of the line of sight (12, 12'), **characterized in that** the light source (79) is arranged pivotably on the telescopic sight (10), and **in that** the second means are designed as a gear unit (34, 36) acting between the telescopic sight (10) and the light source (79).

2. Telescopic sight according to Claim 1, **characterized in that** the first means (20-26) are provided for manually adjusting the direction of the line of sight (12, 12').

3. Telescopic sight according to Claim 2, **characterized in that** the first means have a first adjustment element (20) for aligning the line of sight (12, 12') in a horizontal plane, and a second adjustment element (21) for aligning the line of sight (12, 12') in a vertical plane.

4. Telescopic sight according to one of Claims 1 to 3, **characterized in that** the rangefinder (13) is pivoted counter to the line of sight (12, 12').

5. Telescopic sight according to one of Claims 1 to 4, **characterized in that** the gear unit (34, 36) is designed as a lever mechanism.

6. Telescopic sight according to Claim 5, **characterized in that** the light source (79) is articulated at an end of the telescopic sight (10) on the objective side, and an inverting system (18) is articulated at an end of the telescopic sight (10) on the eyepiece side, and **in that** the free ends of the light source (79) and inverting system (18), which free ends are to face one another, are mutually articulated via a lever (46).

7. Telescopic sight according to Claim 6, **characterized in that** the light source (79) is supported in a ball bearing (80-82) at the end of the telescopic sight (10) on the objective side.

8. Telescopic sight according to Claim 6 or 7, **characterized in that** the inverting system (18) is supported in a cone/ball bearing (194, 196) at the end of the telescopic sight (10) on the eyepiece side.

9. Telescopic sight according to one of Claims 6 to 8, **characterized in that** the lever (46) is rigidly connected to the free end of the light source (79) and articulated to the free end of the inverting system (18).

10. Telescopic sight according to Claim 9, **characterized in that** the lever (46) is connected to the free end of the light source (79) such that it can be adjusted in a first direction.

11. Telescopic sight according to Claim 10, **characterized in that** the lever (46) is provided with a first fork (114) at its end on the objective side, **in that** first prongs (116a, 116b) of the first fork (114) comprise a stub (98) at the free end of the light source (79), and **in that** the first prongs (116a, 116b) can be displaced on the stub (98) in the longitudinal direction thereof and can be fixed in a prescribed position.

12. Telescopic sight according to one of Claims 7 to 11, **characterized in that** the lever (46) is provided with a second fork (118) at its end on the eyepiece side, **in that** second prongs (120a, 120b) of the second fork (118) are provided with longitudinal grooves (132a, 132b), and **in that** pins (134a, 134b) connected to the inverting system (18) run in the longitudinal grooves (132a, 132b).

13. Telescopic sight according to Claims 11 and 12, **characterized in that** the first fork (114) defines a first plane with its first prongs (116a, 116b), **in that** the second fork (118) defines a second plane with its second prongs (120a, 120b), and **in that** the first plane encloses a right angle with the second plane.

14. Telescopic sight according to one of Claims 10 to 13, **characterized in that** the lever (46) has a front part (110) on the objective side and a rear part (112) on the eyepiece side, and **in that** the parts (110, 112) are interconnected adjustably in a second direction.

15. Telescopic sight according to Claim 14, **characterized in that** the first direction encloses a right angle with the second direction.

16. Telescopic sight according to Claims 11 and 14, **characterized in that** the front part (110) is provided with the first fork (114).

17. Telescopic sight according to Claims 12 and 14, **characterized in that** the rear part (112) is provided with the second fork (118).

18. Telescopic sight according to one of Claims 6 to 17, **characterized in that** the free end of the inverting system (18) is formed by the free end of an inner tube (17) of the telescopic sight.

19. Telescopic sight according to one of Claims 1 to 4, **characterized in that** the gear unit is designed as a cable pull mechanism.

20. Telescopic sight according to one of Claims 1 to 4, **characterized in that** the gear unit is designed as a servomotor.

21. Telescopic sight according to Claim 19 or 20, **characterized in that** the gear unit acts in the telescopic sight on an inverting system.

22. Telescopic sight according to one of Claims 1 to 21, **characterized in that** the gear unit (34, 36) has a gear ratio dependent on a focal length of the telescopic sight (10).

23. Telescopic sight according to one of Claims 1 to 22, **characterized in that** the light source (79) has a laser diode (92).

24. Telescopic sight according to one of Claims 1 to 23, **characterized in that** the light source (79) has a focal length of approximately 12 mm.

25. Telescopic sight according to one of Claims 1 to 24, **characterized in that** it has an objective (16) at least one lens (68, 70, 72) of which is fixedly arranged in an outer tube (75) of the telescopic sight (10).

26. Telescopic sight according to one of Claims 1 to 25, **characterized in that** it has a power supply with a battery (142), and **in that** the battery (142) is held at its positive terminal (150) in an axially elastic fashion.

27. Telescopic sight according to Claim 26, **characterized in that** the battery (142) is arranged in a cavity (140) which forms a backward continuation of the rangefinder (13).

28. Telescopic sight according to one of Claims 1 to 27, **characterized in that** the inverting system (18) has a beam splitter (19) at its end on the objective side.

29. Telescopic sight according to Claim 28, **characterized in that** the beam splitter (19) has a first prism (160) and a second prism (161), **in that** the prisms (160, 161) abut one another in an interface plane (164), and **in that** the interface plane (164) encloses with the optical axis (11) an angle (α) in the region of 50° to 70°.

30. Telescopic sight according to Claim 29, **characterized in that** the angle (α) is approximately 60°.

31. Telescopic sight according to Claim 30, **characterized in that** a layered structure in the interface plane (164) has a maximum of sixty individual layers.

32. Telescopic sight according to Claim 31, **characterized in that** the layered structure has a maximum of forty individual layers.

33. Telescopic sight according to Claim 31 or 32, **characterized in that** the layered structure is composed of alternating hafnium individual layers and silicon oxide individual layers.

34. Telescopic sight according to one of Claims 29 to 33, **characterized in that** a received measurement beam (48) incident along the optical axis (11) on the first prism (160) on the objective side is deflected at the interface plane (164) from the optical axis (11), traverses the first prism (160), emerges at a surface of the first prism (160) and is guided onto a sensor (174) whose sensor surface is arranged parallel to the surface.

35. Telescopic sight according to Claim 34, **characterized in that** the received measurement beam (48) is deflected perpendicularly onto the sensor surface.

36. Telescopic sight according to Claim 35, **characterized in that** the first prism (160) is provided at its lower edge on the objective side with a flattened corner (170) whose surface is angled to the optical axis (11) in such a way that a received measurement beam (48) which is incident along the optical axis (11) and is reflected at the angled interface plane (164) strikes the surface of the flattened corner (170) perpendicularly.

37. Telescopic sight according to one of Claims 34 to 36, **characterized in that** a bandpass filter is placed upstream of the sensor (174).

38. Telescopic sight according to Claim 37, **characterized in that** the bandpass filter is arranged between the first prism (160) and the sensor (174).

39. Telescopic sight according to Claim 38, **characterized in that** the bandpass filter is designed as an edge filter (172).

40. Telescopic sight according to Claim 39, **characterized in that** the edge filter (172) is composed of two individual filters cemented to one another.

41. Telescopic sight according to one of Claims 29 to 40, **characterized in that** an eyepiece-side surface (163) of the eyepiece-side second prism (161) defines a second image plane (188) of the telescopic sight (10).

42. Telescopic sight according to Claim 41, **characterized in that** a received measurement beam (48) incident along the optical axis (11) on the first prism (160) on the objective side is deflected at a point of incidence (178) in the interface plane (164) from the optical axis (11), traverses the first prism (160), emerges at a surface of the first prism (160) and is guided to a sensor surface of a sensor (174), and **in that** the distance (1₁) of the point of incidence (178) from the second image plane (188) is equal to the distance (1₂) of the point of incidence (178) from the sensor surface.

43. Telescopic sight according to Claim 41 or 42, **characterized in that** a field lens (168) is cemented onto the eyepiece-side surface (163) of the second prism (161).

44. Telescopic sight according to one of Claims 28 to 43, **characterized in that** the beam splitter (19) is arranged in a fashion secured against rotation in the inverting system (18) by positive locking.

45. Telescopic sight according to one of Claims 6 to 44, **characterized in that** the inverting system (18) is supported in a cone/ball bearing (194, 196) at the end of the telescopic sight (10) on the eyepiece side.

46. Telescopic sight according to Claim 44, **characterized in that** the cone/ball bearing (194, 196) is formed by an internal cone seat (194) on an inner surface of an outer tube (75) of the telescopic sight and by a ball head (196) which is arranged at the eyepiece-side end of an inner tube (17) of the telescopic sight (10).

47. Telescopic sight according to Claim 46, **characterized in that** the ball head (196) is supported against the outer tube (75) by means of a spring (200).

48. Telescopic sight according to one of Claims 6 to 47, **characterized in that** a second image plane (188) is formed at the end of the inverting system (18) on the eyepiece side.

49. Telescopic sight according to Claim 48, **characterized in that** a reticle (190) is arranged at least approximately at the location of the second image plane (188) in the inverting system (18).

50. Telescopic sight according to Claim 49, **characterized in that** the reticle (190) is rigidly connected to the inverting system (18).

51. Telescopic sight according to Claim 49 or 50, **characterized in that** a display (66), for an alphanumeric indication is arranged in the image field on the eyepiece side of the reticle (190) located at least approximately in the second image plane (188).

52. Telescopic sight according to Claim 51, **characterized in that** the reticle (190) can be illuminated, **in that** the intensity of the illumination can be set, and **in that** the light intensity of the alphanumeric indication of the display (66) can be set as a function of the intensity of the illumination of the reticle (190).

53. Telescopic sight according to Claim 52, **characterized in that** at least one actuating knob (61, 62) is arranged on the telescopic sight in order to set the intensity of the illumination of the reticle (190), and **in that** the at least one actuating knob (61, 62) can be used to switch the illumination on and off at the same time.

54. Telescopic sight according to Claim 53, **characterized in that** two actuating knobs (61, 62) are provided in order to increase or to decrease the intensity of the illumination of the reticle (190), and **in that** the illumination can be switched on and off by simultaneously actuating the two actuating knobs (61, 62).

55. Telescopic sight according to one of Claims 1 to 54, **characterized in that** a switch (63) is provided for actuating the rangefinder (13), the switch (63) effecting the output of a transient transmitted measurement beam (15), and **in that** means are provided to permit outputting a further transmitted measurement beam (15) only after the expiry of a predetermined time interval.

56. Telescopic sight according to Claim 55, **characterized in that** the switch (63) can be remote controlled.

57. Telescopic sight according to one of Claims 1 to 56, **characterized in that** it is provided with a rail (58) for fastening to a firearm, and **in that** the rail (58) and the rangefinder are arranged at peripheral positions of the telescopic sight (10) mutually offset by 90°.

## Revendications

1. Lunette de visée comprenant un axe optique (11) et comprenant une ligne de mire (12, 12'), comprenant des premiers moyens (20 - 26) pour régler la direction de la ligne de mire (12, 12'), comprenant un télémètre (13) relié structurellement avec la lunette de visée (10), lequel présente une source de lumière (79) pour émettre un rayon émis de mesure (14, 14'), le rayon émis de mesure (14, 14') se propageant à l'extérieur de la lunette de visée (10) et sa direction coïncidant pour l'essentiel avec la direction de la ligne de mire (12, 12'), et comprenant des deuxièmes moyens pour l'asservissement automatique de la direction du rayon émis de mesure (14, 14') lors du réglage de la direction de la ligne de mire (12, 12'), **caractérisée en ce que** la source de lumière (79) est disposée de manière pivotante sur la lunette de visée (10) et **en ce que** les deuxièmes moyens sont réalisés sous la forme d'un engrenage (34, 36) agissant entre la lunette de visée (10) et la source de lumière (79).

2. Lunette de visée selon la revendication 1, **caractérisée en ce que** les premiers moyens (20 - 26) sont prévus pour régler manuellement la direction de la ligne de mire (12, 12').

3. Lunette de visée selon la revendication 2, **caractérisée en ce que** les premiers moyens présentent un premier élément de réglage (20) pour une orientation de la ligne de mire (12, 12') dans un plan horizontal ainsi qu'un deuxième élément de réglage (21) pour une orientation de la ligne de mire (12, 12') dans un plan vertical.

4. Lunette de visée selon l'une des revendications 1 à 3, **caractérisée en ce que** le télémètre (13) est pivoté en sens inverse de la ligne de mire (12, 12').

5. Lunette de visée selon l'une des revendications 1 à 4, **caractérisée en ce que** l'engrenage (34, 36) est réalisé sous la forme d'un engrenage à levier.

6. Lunette de visée selon la revendication 5, **caractérisée en ce que** la source de lumière (79) est montée de manière articulée sur une extrémité côté objectif de la lunette de visée (10) et un système d'inversion (18) sur une extrémité côté oculaire de la lunette de visée (10), et **en ce que** les extrémités libres dirigées l'une vers l'autre de la source de lumière (79) et du système d'inversion (18) sont reliées ensemble de manière articulée par le biais d'un levier (46).

7. Lunette de visée selon la revendication 6, **caractérisée en ce que** la source de lumière (79), à l'extrémité côté objectif de la lunette de visée (10), est montée dans un roulement à billes (80 - 82).

8. Lunette de visée selon la revendication 6 ou 7, **caractérisée en ce que** le système d'inversion (18), à l'extrémité côté oculaire de la lunette de visée (10), est monté dans un palier conique / roulement à billes (194, 196).

9. Lunette de visée selon l'une des revendications 6 à 8, **caractérisée en ce que** le levier (46) est relié de manière rigide avec l'extrémité libre de la source de lumière (79) et de manière articulée avec l'extrémité libre du système d'inversion (18).

10. Lunette de visée selon la revendication 9, **caractérisée en ce que** le levier (46) est relié avec l'extrémité libre de la source de lumière (79) de manière réglable dans une première direction.

11. Lunette de visée selon la revendication 10, **caractérisée en ce que** le levier (46) est muni à son extrémité côté objectif d'une première fourche (114), **en ce que** des premières dents (116a, 116b) de la première fourche (114) entourent un manchon (98) sur l'extrémité libre de la source de lumière (79), et **en ce que** les premières dents (116a, 116b) peuvent coulisser sur le manchon (98) dans le sens de leur longueur et peuvent être bloquées dans une position prédéfinie.

12. Lunette de visée selon l'une des revendications 7 à 11, **caractérisée en ce que** le levier (46) est muni à son extrémité côté oculaire d'une deuxième fourche (118), **en ce que** des deuxièmes dents (120a, 120b) de la deuxième fourche (118) sont munies de rainures longitudinales (132a, 132b), et **en ce que** des broches (134a, 134b) reliées avec le système d'inversion (18) circulent dans les rainures longitudinales (132a, 132b).

13. Lunette de visée selon les revendications 11 et 12, **caractérisée en ce que** la première fourche (114) définit un premier plan avec ses premières dents (116a, 116b), **en ce que** la deuxième fourche (118) définit un deuxième plan avec ses deuxièmes dents (120a, 120b), et **en ce que** le premier plan forme un angle droit avec le deuxième plan.

14. Lunette de visée selon l'une des revendications 10 à 13, **caractérisée en ce que** le levier (46) présente une partie avant (110) côté objectif ainsi qu'une partie arrière (112) côté oculaire, et **en ce que** les parties (110, 112) sont reliées entre elles de manière ajustable dans une deuxième direction.

15. Lunette de visée selon la revendication 14, **caractérisée en ce que** la première direction forme un angle droit avec la deuxième direction.

16. Lunette de visée selon les revendications 11 et 14, **caractérisée en ce que** la partie avant (110) est munie de la première fourche (114).

17. Lunette de visée selon les revendications 12 et 14, **caractérisée en ce que** la partie arrière (112) est munie de la deuxième fourche (118).

18. Lunette de visée selon l'une des revendications 6 à 17, **caractérisée en ce que** l'extrémité libre du système d'inversion (18) est formée par l'extrémité libre d'un tube intérieur (17) de la lunette de visée.

19. Lunette de visée selon l'une des revendications 1 à 4, **caractérisée en ce que** l'engrenage est réalisé sous la forme d'un engrenage à câble de commande.

20. Lunette de visée selon l'une des revendications 1 à 4, **caractérisée en ce que** l'engrenage est réalisé sous la forme d'un servomoteur.

21. Lunette de visée selon la revendication 19 ou 20, **caractérisée en ce que** l'engrenage dans la lunette de visée vient en prise avec un système d'inversion.

22. Lunette de visée selon l'une des revendications 1 à 21, **caractérisée en ce que** l'engrenage (34, 36) présente un rapport de démultiplication qui dépend d'une distance focale de la lunette de visée (10).

23. Lunette de visée selon l'une des revendications 1 à 22, **caractérisée en ce que** la source de lumière (79) présente une diode laser (92).

24. Lunette de visée selon l'une des revendications 1 à 23, **caractérisée en ce que** la source de lumière (79) présente une distance focale d'environ 12 mm.

25. Lunette de visée selon l'une des revendications 1 à 24, **caractérisée en ce qu'**elle présente un objectif (16) dont l'au moins une lentille (68, 70, 72) est disposée en position fixe dans un tube extérieur (75) de la lunette de visée (10).

26. Lunette de visée selon l'une des revendications 1 à 25, **caractérisée en ce qu'**elle présente une alimentation électrique comprenant une batterie (142), et **en ce que** la batterie (142) est maintenue de manière flexible dans le sens axial par son pôle positif (150).

27. Lunette de visée selon la revendication 26, **caractérisée en ce que** la batterie (142) est disposée dans un espace creux (140) qui forme une continuation vers l'arrière du télémètre (13).

28. Lunette de visée selon l'une des revendications 1 à 27, **caractérisée en ce que** le système d'inversion (18) présente à son extrémité côté objectif un séparateur de faisceaux (19).

29. Lunette de visée selon la revendication 28, **caractérisée en ce que** le séparateur de faisceaux (19) présente un premier prisme (160) ainsi qu'un deuxième prisme (161), **en ce que** les prismes (160, 161) reposent l'un contre l'autre dans un plan de délimitation (164), et **en ce que** le plan de délimitation (164) forme avec l'axe optique (11) un angle (α) dans la plage de 50° à 70°.

30. Lunette de visée selon la revendication 29, **caractérisée en ce que** l'angle (α) est égal à environ 60°.

31. Lunette de visée selon la revendication 30, **caractérisée en ce que** dans le plan de délimitation (164), une structure stratifiée présente un maximum de soixante couches individuelles.

32. Lunette de visée selon la revendication 31, **caractérisée en ce que** la structure stratifiée présente un maximum de quarante couches individuelles.

33. Lunette de visée selon la revendication 31 ou 32, **caractérisée en ce que** la structure stratifiée se compose de couches individuelles en hafnium et de couches individuelles en oxyde de silicium alternées.

34. Lunette de visée selon l'une des revendications 29 à 33, **caractérisée en ce qu'**un rayon reçu de mesure (48) qui vient frapper le premier prisme (160) du côté de l'objectif le long de l'axe optique (11) est dévié au niveau du plan de délimitation (164) hors de l'axe optique (11), traverse le premier prisme (160), sort au niveau d'une surface du premier prisme (160) et est dirigé sur un capteur (174) dont la surface de capteur est disposée parallèlement à la surface.

35. Lunette de visée selon la revendication 34, **caractérisée en ce que** le rayon reçu de mesure (48) est dévié perpendiculairement sur la surface de capteur.

36. Lunette de visée selon la revendication 35, **caractérisée en ce que** le premier prisme (160) est muni à son arête inférieure côté objectif d'un coin aplati (170), dont la surface forme un angle par rapport à l'axe optique (11) de telle sorte qu'un rayon reçu de mesure (48) incident le long de l'axe optique (11) est réfléchi sur le plan de délimitation (164) qui forme l'angle et vient frapper perpendiculairement la surface du coin aplati (170).

37. Lunette de visée selon l'une des revendications 34 à 36, **caractérisée en ce qu'**un filtre passe-bande est branché en amont du capteur (174).

38. Lunette de visée selon la revendication 37, **caractérisée en ce que** le filtre passe-bande est disposé entre le premier prisme (160) et le capteur (174).

39. Lunette de visée selon la revendication 38, **caractérisée en ce que** le filtre passe-bande est réalisé sous la forme d'un filtre à arêtes (172).

40. Lunette de visée selon la revendication 39, **caractérisée en ce que** le filtre à arêtes (172) se compose de deux filtres individuels cimentés l'un sur l'autre.

41. Lunette de visée selon l'une des revendications 29 à 40, **caractérisée en ce qu'**une surface (163) côté oculaire du deuxième prisme (161) côté oculaire définit un deuxième plan d'image (188) de la lunette de visée (10).

42. Lunette de visée selon la revendication 41, **caractérisée en ce qu'**un rayon reçu de mesure (48) qui vient frapper le premier prisme (160) du côté de l'objectif le long de l'axe optique (11) en un point d'impact (178) est dévié au niveau du plan de délimitation (164) hors de l'axe optique (11), traverse le premier prisme (160), sort au niveau d'une surface du premier prisme (160) et est dirigé sur une surface de capteur d'un capteur (174), et **en ce que** l'écart (1₁) entre le point d'impact (178) et le deuxième plan d'image (188) est égal à l'écart (1₂) entre le point d'impact (178) et la surface de capteur.

43. Lunette de visée selon la revendication 41 ou 42, **caractérisée en ce qu'**une lentille de champ (168) est cimentée sur la surface (163) côté oculaire du deuxième prisme (161).

44. Lunette de visée selon l'une des revendications 28 à 43, **caractérisée en ce que** le séparateur de faisceaux (19) est disposé dans le système d'inversion (18) en rotation solidaire par complémentarité de forme.

45. Lunette de visée selon l'une des revendications 6 à 44, **caractérisée en ce que** le système d'inversion (18) est monté dans un palier conique / roulement à billes (194, 196) à l'extrémité côté oculaire de la lunette de visée (10).

46. Lunette de visée selon la revendication 44, **caractérisée en ce que** le palier conique / roulement à billes (194, 196) est formé par un siège conique intérieur (194) sur une surface intérieure d'un tube extérieur (75) de la lunette de visée et par une rotule (196), laquelle est disposée à l'extrémité côté oculaire d'un tube intérieur (17) de la lunette de visée (10).

47. Lunette de visée selon la revendication 46, **caractérisée en ce que** la rotule (196) est appuyée contre le tube extérieur (75) au moyen d'un ressort (200).

48. Lunette de visée selon l'une des revendications 6 à 47, **caractérisée en ce qu'**un deuxième plan d'image (188) est formé à l'extrémité côté oculaire du système d'inversion (18).

49. Lunette de visée selon la revendication 48, **caractérisée en ce qu'**un réticule (190) est disposé au moins approximativement à l'endroit du deuxième plan d'image (188) dans le système d'inversion (18).

50. Lunette de visée selon la revendication 49, **caractérisée en ce que** le réticule (190) est relié de manière rigide avec le système d'inversion (18).

51. Lunette de visée selon la revendication 49 ou 50, **caractérisée en ce qu'**un afficheur (66) pour un affichage alphanumérique est disposé dans le plan d'image sur le côté oculaire du réticule (190) qui se trouve au moins approximativement dans le deuxième plan d'image (188).

52. Lunette de visée selon la revendication 51, **caractérisée en ce que** le réticule (190) est éclairable, **en ce que** l'intensité de l'éclairage est réglable et **en ce que** l'intensité lumineuse de l'affichage alphanumérique de l'afficheur (66) est réglable en fonction de l'intensité de l'éclairage du réticule (190).

53. Lunette de visée selon la revendication 52, **caractérisée en ce qu'**au moins un bouton d'actionnement (61, 62) est disposé sur la lunette de visée pour le réglage de l'intensité de l'éclairage du réticule (190), et **en ce que** l'éclairage peut en même temps être allumé et éteint avec l'au moins un bouton d'actionnement (61, 62).

54. Lunette de visée selon la revendication 53, **caractérisée en ce que** deux boutons d'actionnement (61, 62) sont prévus pour augmenter ou pour réduire l'intensité de l'éclairage du réticule (190) et **en ce que** l'éclairage peut être allumé ou éteint en actionnant simultanément les deux boutons d'actionnement (61, 62).

55. Lunette de visée selon l'une des revendications 1 à 54, **caractérisée en ce qu'**il est prévu un commutateur (63) pour actionner le télémètre (13), le commutateur (63) produisant la délivrance d'un rayon émis de mesure (15) de courte durée, et **en ce que** des moyens sont prévus pour ne permettre une délivrance d'un rayon émis de mesure (15) supplémentaire qu'après l'écoulement d'un intervalle de temps prédéfini.

56. Lunette de visée selon la revendication 55, **caractérisée en ce que** le commutateur (63) peut être commandé à distance.

57. Lunette de visée selon l'une des revendications 1 à 56, **caractérisée en ce qu'**elle est munie d'un rail (58) pour la fixation à une arme à feu, et **en ce que** le rail (58) et le télémètre sont disposés à des positions périphériques de la lunette de visée (10) qui sont décalées de 90° l'une de l'autre.
